# EUROPÄISCHE PATENTANMELDUNG

(11) **EP 4 848 464 A1**
(43) Veröffentlichungstag der Anmeldung: **02.12.2026**
(21) Anmeldenummer: 26180878.6
(22) Anmeldetag: 26.05.2026
(51) Int. Cl.: H01M 50/572, B25F 5/00, H01M 50/247

(54) **VERIFIKATIONSSYSTEM ZWISCHEN AKKUMULATOR UND ENDGERÄT**

(30) Priorität: 30.05.2025 DE 102025121193
(71) Anmelder: Einhell Germany AG, 94405 Landau / Isar (DE)
(72) Erfinder: Folgmann, Daniel, 84164 Moosthenning-Dornwang (DE); Stempfhuber, Johannes, 94437 Mamming (DE); Lang, Oliver, 94469 Deggendorf (DE)
(74) Vertreter: Canzler & Bergmeier Patentanwälte Partnerschaft mbB

(57) **Zusammenfassung**

Die Erfindung betrifft einen Akkumulator (1), insbesondere ein Arbeitsgeräteakkumulator, mit einem Kontaktbereich (2) zum Austausch elektrischer Energie zwischen einer Energiespeichereinheit (56) des Akkumulators (1) und einem Endgerät (60) sowie mit einer Verifikationsvorrichtung (3), mittels der eine Kompatibilität zwischen dem Akkumulator (1) und einem korrespondierenden Endgerät (60) überprüft werden kann.

## Beschreibung

Die vorliegende Erfindung betrifft einen Akkumulator, insbesondere ein Arbeitsgeräteakkumulator, mit einem Kontaktbereich zum Austausch elektrischer Energie zwischen einer Energiespeichereinheit des Akkumulators und einem Endgerät sowie mit einer Verifikationsvorrichtung, mittels der eine Kompatibilität zwischen dem Akkumulator und einem korrespondierenden Endgerät überprüft werden kann.

Aus der DE 10 2007 044 501 A1 ist ein Akkupack für ein Elektrogerät mit einem Kodiersystem bekannt.

Aufgabe der vorliegenden Erfindung ist es, eine zuverlässige, fälschungssichere und/oder sichere Möglichkeit zur Verifikation zwischen Akkumulator und Endgerät zu schaffen.

Die Aufgabe wird gelöst durch zumindest einen Akkumulator, ein Endgerät, ein Verfahren und/oder ein System mit den Merkmalen der unabhängigen Ansprüche. Vorteilhafte oder bevorzugte Ausführungen sind jeweils Gegenstand eines korrespondierenden abhängigen Anspruchs.

Vorgeschlagen wird ein Akkumulator, insbesondere ein Arbeitsgeräteakkumulator, mit einem Kontaktbereich zum Austausch elektrischer Energie zwischen einer Energiespeichereinheit des Akkumulators und einem Endgerät. Mit Hilfe des Akkumulators kann das Endgerät mit elektrischer Energie versorgt werden. Das Endgerät ist somit mobil und kann für verschiedene Einsätze mobil verwendet werden. Beim Endgerät kann es sich ferner um ein Arbeitsgerät handeln. Das Arbeitsgerät kann beispielsweise ein Werkzeug, wie ein Akkuschrauber, ein Akkuwinkelschleifer, eine Akkusäge usw. sein. Zusätzlich oder alternativ kann es sich beim Endgerät aber auch um Gartengeräte, wie beispielsweise Akkurasenmäher, Akkurasentrimmer, Akkuscheren usw. handeln. Des Weiteren kann der Akkumulator im Folgenden auch abgekürzt als Akku bezeichnet werden.

Der Akkumulator umfasst eine Verifikationsvorrichtung, mittels der eine Kompatibilität zwischen dem Akkumulator und einem korrespondierenden Endgerät überprüft werden kann. Dadurch kann sichergestellt werden, dass nur kompatible Endgeräte mit dem Akkumulator verbunden werden können, was eine zuverlässige Funktion und/oder eine erhöhte Betriebssicherheit gewährleistet. Zusätzlich oder alternativ kann sichergestellt werden, dass lediglich eine zertifizierte Verwendung des Systems aus Akku und Endgerät verwendet wird. Die Verifikationsvorrichtung erlaubt weiterhin eine Verwendung des Systems aus Akku und Endgerät, die vom Hersteller zertifiziert sind.

Es ist vorteilhaft, wenn die Verifikationsvorrichtung eine mechanische Schnittstelle umfasst. Zusätzlich oder alternativ ist es vorteilhaft, wenn die Verifikationsvorrichtung ein Schlüssel-Schloss-Prinzip umfasst. Hierdurch kann eine eindeutige mechanische Passung realisiert werden, die eine ungewollte und/oder unverifizierte und/oder unzertifizierte Nutzung nicht kompatibler Endgeräte und Akkus verhindert. Dies erhöht die Betriebssicherheit des Systems aus Akku und Endgerät und verhindert die unerlaubte Verwendung von Akku und/oder Endgerät.

Vorteilhafterweise kann die Verifikationsvorrichtung mit einer Verifikationseinheit des korrespondierenden Endgeräts zusammenwirken, um die Kompatibilität zwischen dem Akkumulator und dem korrespondierenden Endgerät zu überprüfen. Durch diese Wechselwirkung kann eine sichere und/oder automatisierte Überprüfung erfolgen, ob Akku und Endgerät zusammenpassen und/oder zusammen als System verwendet werden dürfen.

Gemäß einer vorteilhaften Weiterbildung der Erfindung umfasst die Verifikationsvorrichtung zumindest einen, insbesondere dreidimensionalen, Verifikationsabschnitt. Mit dem Verifikationsabschnitt kann zumindest ein am Endgerät angeordnetes Verifikationselement zusammengeführt werden, um die Kompatibilität zu prüfen. Ein dreidimensionaler Verifikationsabschnitt ermöglicht eine präzisere mechanische Prüfung, wodurch sichergestellt wird, dass nur passende Endgeräte und Akkus miteinander gekoppelt werden können. Dies stellt sicher, dass nur kompatible Systeme aus Akku und Endgerät miteinander gekoppelt werden können.

Des Weiteren ist es vorteilhaft, wenn der Verifikationsabschnitt derart ausgebildet und/oder eingerichtet ist, dass das am Endgerät angeordnete Verifikationselement eingeführt werden kann. Dadurch wird eine einfache und intuitive Verbindung zwischen Akkumulator und Endgerät ermöglicht. Dies erleichtert den Anwendern das sichere Koppeln und minimiert die Gefahr von Beschädigungen durch unsachgemäße Handhabung.

Darüber hinaus ist es vorteilhaft, wenn der Verifikationsabschnitt zumindest eine Aussparung umfasst. Zusätzlich oder alternativ ist es von Vorteil, wenn der Verifikationsabschnitt zumindest eine Erhebung umfasst. Durch eine solche strukturelle Gestaltung kann eine zuverlässige mechanische Passung sichergestellt werden. Aussparungen und/oder Erhebungen ermöglichen eine eindeutige Zuordnung der Komponenten und verhindern eine nicht zusammenpassende Verbindung bzw. Kopplung zwischen Akku und Endgerät.

Von Vorteil ist es ferner, wenn der Akkumulator ein Gehäuse aufweist, das vorzugsweise zumindest ein Gehäuseoberteil und zumindest ein Gehäuseunterteil aufweist. Der Verifikationsabschnitt ist im und/oder am Gehäuseangeordnet. Vorteilhafterweise ist der Verifikationsabschnitt im und/oder am Gehäuseoberteil angeordnet. Ferner kann die Verifikationsvorrichtung und/oder der Verifikationsabschnitt in einem Bereich des Gehäuses, insbesondere des Gehäuseoberteils, angeordnet sein, der bei bestimmungsgemäßer Kopplung zwischen Akku und Endgerät dem Endgerät zugewandt ist.

Es ist vorteilhaft, wenn die Verifikationsvorrichtung eine Einführrichtung aufweist, in die das zumindest eine Verifikationselement in den zumindest einen Verifikationsabschnitt eingeführt werden kann. Eine definierte Einführrichtung erleichtert die Handhabung und ermöglicht eine schnelle und fehlerfreie Verbindung.

Vorteilhafterweise ist die Einführrichtung in Richtung, insbesondere parallel zu, einer Längsrichtung des Akkumulators orientiert. Die Verifikationsvorrichtung, insbesondere der Verifikationsabschnitt, und der Kontaktbereich sind vorzugsweise in Längsrichtung voneinander beabstandet.

Zusätzlich oder alternativ ist es von Vorteil, wenn die zumindest eine Aussparung zumindest einen Aussparungsabschnitt umfasst. Hierbei kann die zumindest eine Aussparung auch mehrere Aussparungsabschnitte umfassen. Diese erstrecken sich in Längsrichtung und/oder einer Querrichtung des Akkus.

Alternativ oder zusätzlich bringt es Vorteile mit sich, wenn die zumindest eine Aussparung mehrere Aussparungsabschnitte umfasst, die in Längsrichtung und/oder Querrichtung des Akkumulators nebeneinander und/oder voneinander angeordnet ist. Dies ermöglicht eine komplexe Ausbildung der Verifikationsvorrichtung und/oder des Verifikationsabschnitts, in dem verschiedene bzw. komplizierte Verifikationsmuster realisiert werden können. Dadurch wird eine präzisere Unterscheidung zwischen kompatiblen und inkompatiblen Endgeräten erreicht.

Darüber hinaus ist es vorteilhaft, wenn sich die zumindest eine Aussparung in einer Hochrichtung des Akkumulators in den Verifikationsabschnitt hinein und/oder in das Gehäuse hinein erstreckt. Durch diese Ausbildung kann der mechanische Verifikationsabschnitt tief im Gehäuse integriert werden, was eine höhere Stabilität und Robustheit gegenüber mechanischer Beanspruchung gewährleistet. Zudem kann die Einführung des Verifikationselements durch den tieferen Verifikationsabschnitt präziser erfolgen.

Es ist vorteilhaft, wenn die zumindest eine Aussparung zumindest eine Aussparungsebene umfasst. Eine definierte Aussparungsebene erlaubt eine gezielte mechanische Passung, wodurch eine eindeutige Verifizierung erleichtert wird. Dies trägt zur Vermeidung von Fehlverbindungen bei.

Des Weiteren ist es vorteilhaft, wenn die zumindest eine Aussparung zumindest eine erste und eine zweite Aussparungsebene umfasst. Die Mehrstufigkeit der Aussparung erlaubt eine differenzierte mechanische Abstufung, wodurch eine präzisere Unterscheidung zwischen kompatiblen und inkompatiblen Endgeräten erreicht werden kann.

Vorteilhafterweise sind die zumindest zwei Aussparungsebenen in Hochrichtung übereinander angeordnet. Dies ermöglicht eine platzsparende Gestaltung der Verifikationsvorrichtung. Zudem kann so eine genaue Verifikation verschiedener Endgeräte realisiert werden.

Gemäß einer vorteilhaften Weiterbildung der Erfindung ist zumindest eine Erhebung zumindest in der ersten und/oder zweiten Aussparungsebene angeordnet. Durch die Anordnung der Erhebung in einer bestimmten Aussparungsebene kann eine gezielte mechanische Kodierung erfolgen, die sicherstellt, dass nur kompatible Endgeräte mit dem Akku gekoppelt werden können.

Als Ergänzung oder Alternative ist es von Vorteil, wenn der zumindest eine Aussparungsabschnitt in der ersten und/oder in der zweiten Aussparungsebene angeordnet ist. Dies erlaubt eine flexible Gestaltung der Verifikationsvorrichtung, die eine Anpassung an unterschiedliche mechanische Anforderungen verschiedener Endgeräte ermöglicht. Bei mehreren Aussparungsabschnitten können diese auch auf die zumindest zwei Aussparungsebenen verteilt sein. So kann zumindest ein Aussparungsabschnitt in der ersten Aussparungsebene und zumindest ein Aussparungsabschnitt in der zweiten Aussparungsebene angeordnet sein. Bei weiteren Aussparungsebenen können dort ebenfalls Aussparungsabschnitte angeordnet sein.

Vorteilhafterweise weist der zumindest eine Aussparungsabschnitt zumindest eine Längsseite und/oder zumindest eine Querseite auf. Eine definierte Seitenstruktur ermöglicht eine eindeutige mechanische Orientierung des Verifikationselements.

Alternativ oder zusätzlich bringt es Vorteile mit sich, wenn der Verifikationsabschnitt und/oder der zumindest eine Aussparungsabschnitt eine rechteckige Form aufweist. Eine rechteckige Form erleichtert die Herstellung der Verifikationsvorrichtung und/oder ermöglicht eine stabile mechanische Führung des Verifikationselements.

Gemäß einer vorteilhaften Weiterbildung der Erfindung weisen zumindest zwei Aussparungsabschnitte zueinander eine unterschiedliche Länge in Längsrichtung auf. Durch die unterschiedlichen Längen können spezifische mechanische Kodierungen realisiert werden. Der Verifizierung von kompatiblen und inkompatiblen Systemen aus Akku und Endgeräte kann dadurch erleichtert werden.

Des Weiteren ist es vorteilhaft, wenn zumindest zwei der mehreren Aussparungsabschnitte in Querrichtung unmittelbar aneinander angrenzen. Zusätzlich oder alternativ ist es von Vorteil, wenn zumindest zwei der mehreren Aussparungsabschnitte in Querrichtung voneinander beabstandet sind. Eine unmittelbare Anordnung und/oder ein definierter Abstand zwischen den Aussparungsabschnitten ermöglicht eine gezielte Abstufung der mechanischen Kodierung und eine präzisere Identifikation der Kompatibilität zwischen Akkus und Endgeräten.

Es ist vorteilhaft, wenn der Verifikationsabschnitt in Blickrichtung der Hochrichtung die Form eines "E"s aufweist. Diese Formgebung erlaubt eine eindeutige mechanische Kodierung mit mehreren Verifikationselementen, wodurch die Sicherheit der Kompatibilitätsprüfung erhöht wird. Zudem wird eine präzise Führung des Verifikationselements erleichtert.

Vorteilhafterweise ist die zumindest eine Erhebung, insbesondere vollständig, von der Aussparung und/oder zumindest einem Aussparungsabschnitt umgeben. Dadurch wird eine geschützte Positionierung der Erhebung erreicht. Zudem wird eine präzisere mechanische Passung zwischen Akkumulator und Endgerät erreicht.

Vorteilhafterweise ist die Verifikationsvorrichtung ein elektrisches und/oder elektronisches Verifikationssystem. Dadurch kann die Kompatibilitätsprüfung automatisiert und/oder präziser durchgeführt werden, was eine zuverlässige Identifikation und/oder Prüfung der Kompatibilität zwischen Akkus und Endgeräte ermöglicht.

Es ist vorteilhaft, wenn der Akkumulator zumindest eine elektrische und/oder elektronische Prüfeinheit umfasst, mittels der die Kompatibilität zwischen Akkumulator und Endgerät überprüft werden kann. Eine solche Prüfeinheit erlaubt eine kontinuierliche und/oder softwaregesteuerte Überprüfung der Kompatibilität, wodurch eine höhere Zuverlässigkeit bei der Erkennung verschiedener Akku- und/oder Endgerätetypen erzielt wird.

Gemäß einer vorteilhaften Weiterbildung der Erfindung weist der Akkumulator eine Akkusteuereinheit auf, wobei die Akkusteuereinheit die Prüfeinheit umfasst. Zusätzlich oder alternativ ist es von Vorteil, wenn die Prüfeinheit die Akkusteuereinheit ist. Dies ermöglicht eine zentrale Steuerung der Verifikation innerhalb des Akkumulators und reduziert den Bedarf an separaten Prüfkomponenten.

Alternativ oder zusätzlich bringt es Vorteile mit sich, wenn die Verifikationsvorrichtung zumindest ein elektrisches Kontaktelement umfasst. Ein elektrisches Kontaktelement ermöglicht eine direkte Kommunikation zwischen Akkumulator und Endgerät.

Es ist vorteilhaft, wenn die Verifikationsvorrichtung mehrere Kontaktelemente umfasst. Durch mehrere Kontaktelemente können mehrere und/oder vielfältige Signalübertragungswege ausgebildet werden. Durch die mehreren Kontaktelemente kann eine Fälschungssicherung der Verifikationsvorrichtung und des Verifikationssystem als Ganzes erhöht werden. Das Verifikationssystem ist, wie im Folgenden erläutert wird, die Verifikationsvorrichtung am Akku und eine Verifikationseinheit am Endgerät.

Des Weiteren ist es vorteilhaft, wenn die Verifikationsvorrichtung zumindest einen elektrischen Schalter umfasst. Ein elektrischer Schalter ermöglicht es, die Verifikation mit einfachen Mitteln durchzuführen. Dies erhöht die Sicherheit und/oder verhindert eine unerwünschte bzw. nicht autorisierte Nutzung des Akkus und/oder des Endgeräts.

Darüber hinaus ist es vorteilhaft, wenn die Verifikationsvorrichtung zumindest eine Akkuverifikationsschnittstelle umfasst. Die Akkuverifikationsschnittstelle kann hierbei als Nahfunkschnittstelle ausgebildet sein. Die Akkuverifikationsschnittstelle und/oder die Nahfunkschnittstelle ermöglicht eine drahtlose Identifikation und/oder Kommunikation zwischen Akkumulator und Endgerät. Dadurch kann eine sichere und/oder fälschungssichere Verifikation, die vorzugsweise auf digitalem Wege erfolgt, durchgeführt werden.

Als Ergänzung oder Alternative ist es von Vorteil, wenn die Verifikationsvorrichtung zumindest einen Sensor umfasst. Ein Sensor kann verschiedene physikalische Parameter erfassen, um die korrekte Kompatibilität zwischen Akku und Endgerät zu erfassen.

Vorteilhafterweise ist das zumindest eine Kontaktelement, der zumindest eine elektrische Schalter, die zumindest eine Akkuverifikationsschnittstelle und/oder der zumindest eine Sensor im Verifikationsabschnitt angeordnet.

Durch diese Anordnung wird eine kompakte Bauweise der Verifikationsvorrichtung ermöglicht, die eine präzise Erfassung der Kompatibilität gewährleistet.

Alternativ oder zusätzlich bringt es Vorteile mit sich, wenn das zumindest eine Kontaktelement, der zumindest eine elektrische Schalter, die zumindest eine Akkuverifikationsschnittstelle und/oder der zumindest eine Sensor in der Aussparung angeordnet ist. Eine Anordnung in der Aussparung sorgt für eine geschützte Unterbringung der Komponenten und/oder minimiert das Risiko mechanischer Beschädigungen.

Es ist vorteilhaft, wenn das zumindest eine Kontaktelement, der zumindest eine elektrische Schalter, die zumindest eine Akkuverifikationsschnittstelle und/oder der zumindest eine Sensor im Bereich neben der Aussparung und/oder im Bereich neben dem Verifikationsabschnitt angeordnet ist. Dies erlaubt eine modulare Gestaltung der Verifikationsvorrichtung, bei der einzelne Elemente flexibel positioniert werden sind.

Gemäß einer vorteilhaften Weiterbildung der Erfindung ist das zumindest eine Kontaktelement, der zumindest eine elektrische Schalter, die zumindest eine Akkuverifikationsschnittstelle und/oder der zumindest eine Sensor zumindest in der ersten und/oder in der zweiten Aussparungsebene angeordnet. Durch diese gestaffelte Anordnung können verschiedene Verifikationsstufen realisiert werden, wodurch eine noch präzisere Überprüfung der Kompatibilität zwischen Akku und Endgerät ermöglicht wird.

Alternativ oder zusätzlich bringt es Vorteile mit sich, wenn das zumindest eine Kontaktelement, der zumindest eine elektrische Schalter, die zumindest eine Akkuverifikationsschnittstelle und/oder der zumindest eine Sensor in dem zumindest einen Aussparungsabschnitt angeordnet ist. Durch diese Anordnung wird eine kompakte und/oder geschützte Platzierung der elektrischen und elektronischen Komponenten ermöglicht, wodurch deren mechanische Belastung reduziert und/oder die Lebensdauer der Verifikationsvorrichtung erhöht wird. Des Weiteren kann dadurch die Verifikationsvorrichtung komplex ausgebildet werden, so dass die Fälschungssicherheit erhöht wird.

Es ist vorteilhaft, wenn das zumindest eine Kontaktelement, der zumindest eine elektrische Schalter, die zumindest eine Akkuverifikationsschnittstelle und/oder der zumindest eine Sensor an der zumindest einen Längsseite und/oder an der zumindest einen Querseite angeordnet ist. Des Weiteren kann dadurch die Verifikationsvorrichtung komplex ausgebildet werden, so dass die Fälschungssicherheit erhöht wird.

Gemäß einer vorteilhaften Weiterbildung der Erfindung umfasst die Verifikationsvorrichtung mehrere Kontaktelemente, mehrere elektrische Schalter, mehrere Akkuverifikationsschnittstellen und/oder mehrere Sensoren. Durch die Verwendung mehrerer Elemente kann die Fälschungssicherheit erhöht werden. Je komplexer die Verifikationsvorrichtung ausgebildet ist, desto schwieriger ist es, die Verifikation mit einfachen Mitteln zu täuschen.

Vorteilhafterweise sind das zumindest eine Kontaktelement, der zumindest eine elektrische Schalter, die zumindest eine Akkuverifikationsschnittstelle und/oder der zumindest eine Sensor mit der Prüfeinheit verbunden. Dies ermöglicht eine zentrale Erfassung und Auswertung der Verifikationssignale, wodurch eine präzise und/oder zuverlässige Kompatibilitätsprüfung sichergestellt wird. Zudem kann die Prüfeinheit weitere Funktionen wie eine Plausibilitätskontrolle übernehmen.

Es ist vorteilhaft, wenn mehrere Kontaktelemente in Reihe und/oder parallel verschaltet sind. Durch eine gezielte und/oder komplizierte Verschaltung kann eine verbesserte Verlässlichkeit der Verifikationsvorrichtung ermöglicht werden. Die Fälschungssicherheit kann hierdurch erhöht werden.

Des Weiteren ist es vorteilhaft, wenn mehrere Schalter in Reihe und/oder parallel verschaltet sind. Hierdurch kann eine gestaffelte und/oder mehrstufige Verifikation realisiert werden, bei der mehrere Bedingungen erfüllt sein müssen, bevor eine erfolgreiche Authentifizierung erfolgt. Dies erhöht die Sicherheit und/oder verhindert eine unerwünschte Nutzung durch nicht autorisierte Endgeräte.

Darüber hinaus ist es vorteilhaft, wenn zumindest einige, insbesondere alle, der mehreren Kontaktelemente und/oder der mehreren Schalter einzeln und/oder getrennt voneinander mit der Prüfeinheit verbunden sind. Dies erlaubt eine individuelle Auswertung jedes einzelnen Elements, wodurch eine sehr sichere Kompatibilitätsprüfung erfolgen kann.

Alternativ oder zusätzlich bringt es Vorteile mit sich, wenn die Schaltwege von zumindest zwei Schaltern zueinander unterschiedlich sind. Unterschiedliche Schaltwege erlauben eine individuelle Verifikationsvorrichtung. Infolgedessen kann auch hierdurch die Fälschungssicherheit erhöht werden.

Vorteilhafterweise sind alle Schaltwege der Schalter zueinander unterschiedlich. Dadurch kann eine eindeutige und/oder fälschungssichere Verifikationsvorrichtung geschaffen werden, die eine Manipulation oder Umgehung der Kompatibilitätsprüfung verhindert.

Es ist vorteilhaft, wenn die Prüfeinheit derart ausgebildet und/oder eingerichtet ist, dass sie mit Hilfe des angekoppelten Endgeräts eine Authentifizierung durchführen kann. Des Weiteren kann die Prüfeinheit eine Authentifizierung des Akkus überprüfen. Eine Authentifizierung des Endgeräts ermöglicht eine gezielte Zugriffssteuerung, so dass nur autorisierte bzw. verifizierte Endgeräte mit dem Akkumulator verbunden werden können.

Gemäß einer vorteilhaften Weiterbildung der Erfindung umfasst die zumindest eine Akkuverifikationsschnittstelle eine drahtlose Sende- und/oder Empfangseinheit. Dies erlaubt eine kontaktlose Überprüfung der Kompatibilität. Zudem kann eine drahtlose Authentifizierung eine flexiblere Handhabung ermöglichen.

Es ist vorteilhaft, wenn die Prüfeinheit derart ausgebildet und/oder eingerichtet ist, dass sie, insbesondere über das zumindest eine Kontaktelement und/oder die zumindest eine Akkuverifikationsschnittstelle, einen Authentifizierungsschlüssel vom angekoppelten Endgerät abfragen kann. Durch die Abfrage eines Authentifizierungsschlüssels kann sichergestellt werden, dass nur autorisierte und/oder verifizierte Endgeräte mit dem Akkumulator interagieren. Dies erhöht die Fälschungssicherheit und schützt vor Manipulation und/oder ungewollter Nutzung. Der Authentifizierungsschlüssel kann hierbei beispielsweise in einen Speicher des Endgeräts abgespeichert sein.

Vorteilhafterweise ist die Prüfeinheit derart ausgebildet und/oder eingerichtet, dass sie, insbesondere über das zumindest eine Kontaktelement und/oder die zumindest eine Akkuverifikationsschnittstelle, einen Abfragewert an das angekoppelte Endgerät übertragen und einen auf Basis des Abfragewerts durch das angekoppelte Endgerät veränderten Antwortwert empfangen und auswerten kann. Dieses Challenge-Response-Verfahren stellt eine sichere Authentifizierungsmethode dar, die Manipulationen erschwert und/oder eine zuverlässige Identifikation des Endgeräts ermöglicht.

Es ist vorteilhaft, wenn die Prüfeinheit derart ausgebildet und/oder eingerichtet ist, dass sie, insbesondere über das zumindest eine Kontaktelement und/oder die zumindest eine Akkuverifikationsschnittstelle, ein digitales Zertifikat vom angekoppelten Endgerät empfangen und auswerten kann. Ein digitales Zertifikat bietet eine kryptografisch gesicherte Authentifizierungsmethode, die einen hohen Schutz gegen Fälschung und/oder unerlaubten Zugriff gewährleistet.

Alternativ oder zusätzlich bringt es Vorteile mit sich, wenn die zumindest eine Akkuverifikationsschnittstelle NFC, Bluetooth, Zigbee, Z-Wave, UWB (Ultra-Wideband), RFID, Wi-Fi Direct und/oder EnOcean ist. Hierdurch sind verschiedene Möglichkeiten für die Kommunikation gegeben.

Vorteilhafterweise weist der Akkumulator zumindest eine Akkudatenschnittstelle auf, die Wi-Fi, NFC und/oder Bluetooth ist. Eine solche Akkudatenschnittstelle ermöglicht den drahtlosen Zugriff auf Informationen des Akkumulators, was eine Fernüberwachung, Diagnose und/oder Aktualisierung von Firmware erleichtert.

Es ist vorteilhaft, wenn der zumindest eine Sensor ein Hallsensor ist. Ein Hallsensor kann zur kontaktlosen Erkennung von Magnetfeldern genutzt werden, wodurch beispielsweise eine sichere Positionserkennung des Endgeräts realisiert werden kann.

Vorgeschlagen wird ferner ein Endgerät, insbesondere ein Arbeitsgerät, mit zumindest einem Koppelbereich zum Ankoppeln zumindest eines Akkumulators zum Betreiben des Endgeräts sowie mit zumindest einer Verifikationseinheit, mittels der eine Kompatibilität zwischen Akkumulator und Endgerät überprüft werden kann. Mit Hilfe der Verifikationseinheit kann eine Kompatibilitätsprüfung durchgeführt werden, wodurch nur zueinander passende Akkumulatoren und Endgeräte miteinander verwendet werden können.

Es ist vorteilhaft, wenn die Verifikationseinheit zumindest ein Verifikationselement umfasst. Das Verifikationselement dient als mechanische Schnittstelle zur Kopplung mit einer korrespondierenden Struktur am Akkumulator, insbesondere einer Verifikationsvorrichtung des Akkus. Dadurch kann eine zuverlässige Kompatibilitätsprüfung gewährleistet werden.

Vorteilhafterweise ist das zumindest eine Verifikationselement lösbar am Endgerät angeordnet. Die lösbare Anordnung ermöglicht es, das Endgerät flexibel an verschiedene Akkutypen anzupassen. Insbesondere kann das Endgerät auch mit älteren oder alternativen Akkumulatoren verwendet werden, die keine entsprechende Verifikationsvorrichtung aufweisen.

Gemäß einer vorteilhaften Weiterbildung der Erfindung ist das Verifikationselement mittels eines Verriegelungsmechanismus lösbar am Endgerät angeordnet. Der Verriegelungsmechanismus gewährleistet eine sichere Befestigung während des Betriebs und ermöglicht gleichzeitig eine Demontage des Verifikationselements. Dadurch wird die Adaptionsfähigkeit des Endgeräts verbessert.

Des Weiteren ist es vorteilhaft, wenn der Verriegelungsmechanismus eine Verriegelungseinstellung und eine Entriegelungseinstellung umfasst. In der Verriegelungseinstellung ist das Verifikationselement mit dem Endgerät gekoppelt. In der Entriegelungseinstellung kann das Verifikationselement vom Endgerät gelöst werden. Hierdurch kann das Verifikationselement gezielt angeordnet und gelöst werden.

Alternativ oder zusätzlich bringt es Vorteile mit sich, wenn der Verriegelungsmechanismus ein elektromechanischer Verriegelungsmechanismus ist. Ein elektromechanischer Mechanismus erlaubt eine automatisierte Steuerung der Verriegelung und erhöht die Sicherheit gegen unbefugtes Entfernen des Verifikationselements.

Vorteilhafterweise umfasst das Endgerät und/oder die Verifikationseinheit eine Endgerätesteuereinheit, mittels der der elektromechanische Verriegelungsmechanismus entriegelt werden kann, um das Verifikationselement zu lösen.

Es ist vorteilhaft, wenn das Endgerät und/oder die Verifikationseinheit eine Endgeräteverifikationsschnittstelle und/oder eine Endgerätedatenschnittstelle umfasst, mittels der eine Datenverbindung zum Akkumulator ausgebildet werden kann. Darüber kann vom Akkumulator und/oder von einem externen Gerät ein Freischaltcode erhalten werden, mittels dem der Verriegelungsmechanismus entriegelt werden kann. Mit Hilfe des Freischaltcodes kann die Verriegelung lediglich von autorisierten Stellen gelöst werden. Der Freischaltcode bietet eine sehr sichere Möglichkeit, dass ausschließlich autorisierte Stellen, beispielsweise der Akku- und/oder der Endgerätehersteller, das Verifikationselement lösen bzw. die Erlaubnis dafür erteilen kann.

Gemäß einer vorteilhaften Weiterbildung der Erfindung ist die Endgeräteverifikationsschnittstelle und/oder die Endgerätedatenschnittstelle mit der Endgerätesteuereinheit verbunden. Durch die Verbindung mit der Steuereinheit können die Endgeräteverifikationsschnittstelle und/oder die Endgerätedatenschnittstelle aktiv zur Kommunikation mit dem Akku und/oder dem externen Gerät verwendet werden. Die Steuereinheit kann über die Endgeräteverifikationsschnittstelle und/oder die Endgerätedatenschnittstelle beispielsweise den Freischaltcode erhalten und/oder die Verifikation durchführen.

Darüber hinaus ist es vorteilhaft, wenn das zumindest eine Verifikationselement zumindest eine Elementlängsseite umfasst. Die Elementlängsseite kann zur mechanischen Führung und/oder zur mechanischen Verifikation.

Des Weiteren ist es vorteilhaft, wenn das zumindest eine Verifikationselement zumindest eine Elementquerseite umfasst. Die Elementquerseite kann zusätzlich oder alternativ zur zumindest einen Elementlängsseite zur mechanischen Führung und/oder zur mechanischen Verifikation dienen. Dadurch kann insbesondere das Schlüssel-Schloss-Prinzip ausgebildet werden.

Es ist vorteilhaft, wenn das Verifikationselement zumindest einen Gegenkontakt umfasst. Der Gegenkontakt ermöglicht eine elektrische und/oder elektronische Verifikation durch Kontaktierung mit einer entsprechenden Einheit am Akkumulator. Dadurch kann eine zusätzliche Authentifizierungsstufe geschaffen werden.

Vorteilhafterweise ist der zumindest eine Gegenkontakt an der Elementlängsseite und/oder an der Elementquerseite angeordnet. Hierdurch kann eine sichere und/oder fälschungssichere Verifikation durchgeführt werden.

Vorgeschlagen wird des Weiteren ein Verfahren zum Anpassen eines Endgeräts an einen Akkumulator, wobei das Endgerät vorzugsweise zumindest ein Merkmal der vorangegangenen und/oder nachfolgenden Beschreibung umfasst. Dabei kann das Verifikationselement zum Verifizieren einer Kompatibilität zwischen dem Endgerät und Akkumulator vom Endgerät entfernt werden. Das Verfahren erlaubt die rückwärtige Kompatibilität mit älteren Akkumulatoren, indem das Verifikationselement entfernt wird. Dadurch wird die Einsatzvielfalt des Endgeräts gesteigert.

Es ist vorteilhaft, wenn ein Verriegelungsmechanismus zum Verriegeln des Verifikationselements mit dem Endgerät entriegelt wird. Dies ermöglicht eine sichere und kontrollierte Demontage des Verifikationselements. Gleichzeitig wird die Unversehrtheit des Endgeräts bei der Anpassung gewahrt.

Vorteilhafterweise wird zum Entriegeln des Verriegelungsmechanismus ein Freischaltcode auf das Endgerät, insbesondere eine Endgerätesteuereinheit, übertragen. Der Einsatz eines Freischaltcodes verhindert unautorisierte Eingriffe und erlaubt eine gezielte Steuerung der Kompatibilitätsfunktionen. Der Freischaltcode bietet darüber hinaus eine sehr sichere und/oder fälschungssichere Möglichkeit das Verifikationselement ausschließlich von autorisierten Stellen zu lösen.

Es ist vorteilhaft, wenn das Übertragen des Freischaltcodes über eine Endgeräteverifikationsschnittstelle und/oder eine Endgerätedatenschnittstelle des Endgeräts erfolgt. Dies ermöglicht eine einfache Übertragung über bestehende Schnittstellen und reduziert den manuellen Aufwand. Der Vorgang lässt sich dadurch effizient in digitale Systemprozesse einbinden.

Darüber hinaus ist es vorteilhaft, wenn das Übertragen des Freischaltcodes vom Akkumulator und/oder einer externen Einheit auf das Endgerät erfolgt. Dies ermöglicht eine dynamische Freigabe des Verifikationselements in Abhängigkeit des Akkus. Durch die Übertragung vom externen Gerät bzw. von der externen Einheit, beispielsweise von einem Smartphone, kann das Freischalten sehr flexible erfolgen.

Gemäß einer vorteilhaften Weiterbildung der Erfindung wird das Endgerät und/oder der Akkumulator registriert. Eine Registrierung stellt sicher, dass nur bekannte und autorisierte Geräte im System verwendet werden können. Dies erhöht die Sicherheit und Nachverfolgbarkeit der Systemkomponenten.

Es ist vorteilhaft, wenn der Freischaltcode nach der Registrierung des Endgeräts und/oder des Akkumulators erhalten bleibt. Dadurch kann die Ausgabe des Freischaltcodes an definierte Bedingungen geknüpft werden, was eine gezielte Steuerung der Kompatibilitätsfreigabe ermöglicht.

Vorgeschlagen wird ein System mit einem Akkumulator. Mit Hilfe des Akkumulators kann elektrische Energie für den Betrieb des Endgeräts bereitgestellt werden.

Das System umfasst ferner ein Endgerät, das mit dem Akkumulator gekoppelt werden kann. Das Endgerät kann hierbei das bereits beschriebene Arbeitsgerät sein.

Das System umfasst außerdem ein Verifikationssystem, mittels dem eine Kompatibilität zwischen dem Akkumulator und dem Endgerät überprüft werden kann. Der Akkumulator ist hierbei gemäß einem oder mehreren der in der vorangegangenen und/oder nachfolgenden Beschreibung genannten Merkmale ausgebildet. Zusätzlich oder alternativ ist das Endgerät gemäß einem oder mehreren der in der vorangegangenen und/oder nachfolgenden Beschreibung genannten Merkmale ausgebildet.

Durch das Verifikationssystem kann eine Kompatibilitätsprüfung durchgeführt werden, die mechanische und/oder elektrische und/oder elektronische Verifikationsmechanismen umfassen kann. Zudem wird verhindert, dass nicht autorisierte und/oder inkompatible Endgeräte mit dem Akkumulator verbunden werden. Es kann sichergestellt werden, dass lediglich vom Hersteller des Akkus und/oder des Endgeräts autorisierte, verifizierte und/oder zertifizierte Akkus und/oder Endgeräte miteinander gekoppelt werden.

Es ist vorteilhaft, wenn das Verifikationssystem eine Verifikationsvorrichtung des Akkumulators und eine Verifikationseinheit des Endgeräts umfasst.

Hierdurch kann eine bidirektionale Überprüfung ermöglicht werden, bei der sowohl der Akkumulator als auch das Endgerät aktiv an der Verifikationsprüfung teilnehmen. Dadurch kann das Schlüssel-Schloss-Prinzip ausgebildet werden, um das Endgerät und/oder den Akku zu verifizieren. Dadurch kann eine präzisere Identifikation kompatibler Geräte erfolgen und der Schutz vor Manipulation oder Falschverbindungen weiter erhöht werden.

Weitere Vorteile der Erfindung sind in den nachfolgenden Ausführungsbeispielen beschrieben. Es zeigen:
- **Figur 1**: eine perspektivische Ansicht eines Akkumulators mit einer Verifikationsvorrichtung,
- **Figur 2**: eine Ansicht von oben auf den Akkumulator mit der Verifikationsvorrichtung,
- **Figur 3**: eine Schnittansicht des Akkumulators mit der Verifikationsvorrichtung,
- **Figur 4**: eine perspektivische Ansicht der Verifikationsvorrichtung,
- **Figur 5**: eine Ansicht von oben auf die Verifikationsvorrichtung,
- **Figur 6**: eine Ansicht von oben auf eine Ausführungsform der Verifikationsvorrichtung mit einer Ausführungsform einer Verifikationseinheit,
- **Figur 7**: eine Ansicht von oben auf eine Ausführungsform der Verifikationsvorrichtung mit einer Ausführungsform der Verifikationseinheit,
- **Figur 8**: eine Ansicht von oben auf eine Ausführungsform der Verifikationsvorrichtung mit einer Ausführungsform der Verifikationseinheit,
- **Figur 9**: eine Ansicht von oben auf eine Ausführungsform der Verifikationsvorrichtung mit einer Ausführungsform der Verifikationseinheit,
- **Figur 10**: eine Ansicht von oben auf eine Ausführungsform der Verifikationsvorrichtung mit einer Ausführungsform der Verifikationseinheit,
- **Figur 11**: eine Ansicht von oben auf eine Ausführungsform der Verifikationsvorrichtung mit einer Ausführungsform der Verifikationseinheit,
- **Figur 12**: eine Ansicht von oben auf eine Ausführungsform der Verifikationsvorrichtung mit einer Ausführungsform der Verifikationseinheit,
- **Figur 13**: eine Ansicht von oben auf eine Ausführungsform der Verifikationsvorrichtung mit einer Ausführungsform der Verifikationseinheit,
- **Figur 14**: eine Ansicht von oben auf eine Ausführungsform der Verifikationsvorrichtung mit einer Ausführungsform der Verifikationseinheit,
- **Figur 15**: eine Ansicht von oben auf eine Ausführungsform der Verifikationsvorrichtung mit einer Ausführungsform der Verifikationseinheit,
- **Figur 16**: eine Ansicht von oben auf eine Ausführungsform der Verifikationsvorrichtung mit einer Ausführungsform der Verifikationseinheit,
- **Figur 17**: eine Ansicht von oben auf eine Ausführungsform der Verifikationsvorrichtung mit einer Ausführungsform der Verifikationseinheit,
- **Figur 18**: eine schematische Ansicht eines Endgeräts,
- **Figur 19**: eine Schnittansicht des Akkus und des damit gekoppelten Endgeräts,
- **Figur 20**: eine perspektivische Ansicht der Verifikationseinheit,
- **Figur 21**: eine Schnittansicht des Akkus und des damit gekoppelten Endgeräts und
- **Figur 22**: eine Schnittansicht des Akkus Endgeräts mit Verriegelungsmechanismus.

In den folgenden Figuren werden einige Merkmale mittels den Bezeichnungen "erstes", "zweites", "drittes" usw. gekennzeichnet bzw. durchnummeriert. Dies dient zur Unterscheidung bzw. zur einfacheren Erklärung der Merkmale in den Figuren. Dies soll keine Reihenfolge der entsprechenden Merkmale implizieren. Dies soll insbesondere keine hierarchische Reihenfolge der Merkmale implizieren.

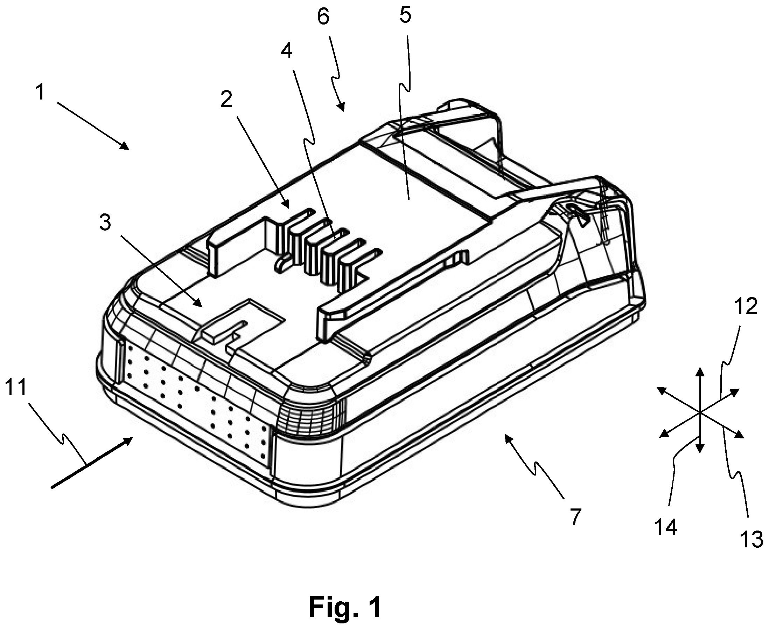

Figur 1 zeigt eine perspektivische Ansicht eines Akkumulators 1 mit einer Verifikationsvorrichtung 3. Der Akkumulator 1 weist einen Kontaktbereich 2 auf, der zum Austausch elektrischer Energie zwischen einer Energiespeichereinheit 56 und einem Endgerät 60 dient. Der Kontaktbereich 2 ist gemäß Figur 1 im oberen Bereich des Akkumulators 1 angeordnet und umfasst mehrere Kontakte 4, die eine elektrische Verbindung mit einem korrespondierenden Endgerät 60 ermöglichen. Das Endgerät 60 kann hierbei ein Handwerkzeug und/oder ein Gartengerät und/oder ein Arbeitsgerät sein. Zusätzlich oder alternativ kann das Endgerät 60 aber auch ein Ladegerät sein, mittels dem der Akku 1 geladen werden kann. Zumindest kann mit Hilfe des Kontaktbereichs 2 eine Verbindung zum Ladegerät hergestellt werden, um den Akku 1 zu laden. Der Akkumulator 1 kann auch abgekürzt als Akku 1 bezeichnet werden.

Die Verifikationsvorrichtung 3 ist gemäß Figur 1 im Bereich neben dem Kontaktbereich 2 angeordnet. Die Verifikationsvorrichtung 3 dient dazu, die Kompatibilität zwischen dem Akkumulator 1 und einem korrespondierenden Endgerät 60 zu überprüfen, wodurch eine sichere, fälschungssichere und/oder fehlerfreie Verbindung zwischen Akku 1 und Endgerät 60 gewährleistet wird. Dadurch wird sichergestellt, dass nur verifizierte und/oder zertifizierte Akkus 1 und Endgeräte 60 miteinander gekoppelt werden.

Der Akkumulator 1 umfasst ein Gehäuse 5, das ein Gehäuseoberteil 6 und ein Gehäuseunterteil 7 umfasst. Das Gehäuse 5 schützt die internen Komponenten des Akkumulators 1 und sorgt für eine stabile mechanische Verbindung mit dem Endgerät 60.

Weiterhin weist der Akkumulator 1 eine Einführrichtung 11 auf, die in Figur 1 durch einen Richtungspfeil verdeutlicht ist. Die Einführrichtung 11 verläuft in einer Längsrichtung 12 des Akkumulators 1. In der Einführrichtung 11 kann das Endgerät 60 mit dem Akku 1 gekoppelt werden.

Gemäß Figur 1 ist die Längsrichtung 12 durch eine Pfeilmarkierung gekennzeichnet. Zusätzlich sind eine Querrichtung 13 und eine Hochrichtung 14 dargestellt, die Richtungen des Akkumulators 1 definieren.

Merkmale, welche bereits in der zumindest einen vorgegangenen Figur beschrieben sind, können der Einfachheit halber nicht nochmals erklärt werden. Ferner können Merkmale auch erst in dieser oder in zumindest einer der nachfolgenden Figuren beschrieben werden. Des Weiteren werden der Einfachheit halber für gleiche Merkmale gleiche Bezugszeichen verwendet. Außerdem können der Übersichtlichkeit halber nicht mehr alle Merkmale in den folgenden Figuren gezeigt und/oder mit einem Bezugszeichen versehen sein. Es können jedoch in einer oder mehreren der vorangegangenen Figuren gezeigte Merkmale auch in dieser oder in einer oder mehreren der nachfolgenden Figuren vorhanden sein. Ferner können der Übersichtlichkeit halber Merkmale auch erst in dieser oder in einer oder mehreren der nachfolgenden Figuren gezeigt und/oder mit einem Bezugszeichen versehen sein. Nichtsdestotrotz können Merkmale, welche erst in einer oder mehreren der nachfolgenden Figuren gezeigt sind, auch bereits in dieser oder einer vorangegangenen Figur vorhanden sein.

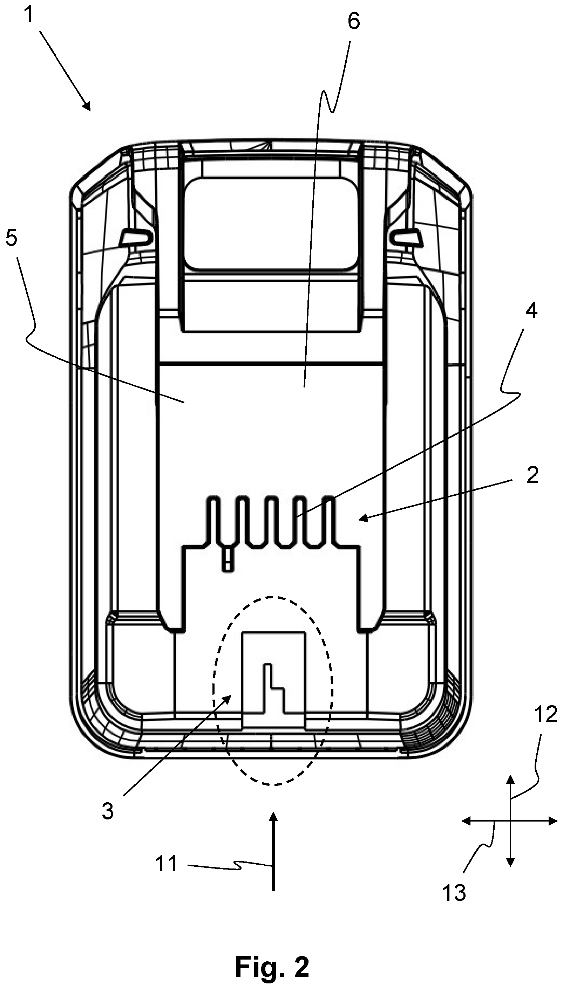

Figur 2 zeigt eine Ansicht von oben auf den Akkumulator 1 mit der Verifikationsvorrichtung 3. Die Anordnung der Verifikationsvorrichtung 3 ermöglicht eine sichere mechanische und/oder elektrische Prüfung der Kompatibilität zwischen dem Akkumulator 1 und einem angeschlossenen Endgerät 60. Durch diese Anordnung wird sichergestellt, dass nur kompatible Endgeräte 60 mit dem Akkumulator 1 gekoppelt werden können, was die Betriebssicherheit und/oder den Schutz vor Fälschungen des Akkus 1 und/oder des Endgeräts 60 erhöht.

Das Gehäuse 5 des Akkumulators 1 und das Gehäuseoberteil 6 ist ebenfalls in Figur 2 dargestellt. Die Verifikationsvorrichtung 3 ist im und/oder am Gehäuseoberteil 6 angeordnet.

Ferner ist nochmals die Einführrichtung 11 gezeigt, die in Richtung der Längsrichtung 12 verläuft. Die Einführrichtung 11 gewährleistet eine präzise Führung des Endgeräts 60 während des Ansteckvorgangs, wodurch eine fehlerfreie Verbindung zwischen den Kontakten 4 des Akkumulators 1 und den Gegenkontakten des Endgeräts 60 ermöglicht wird.

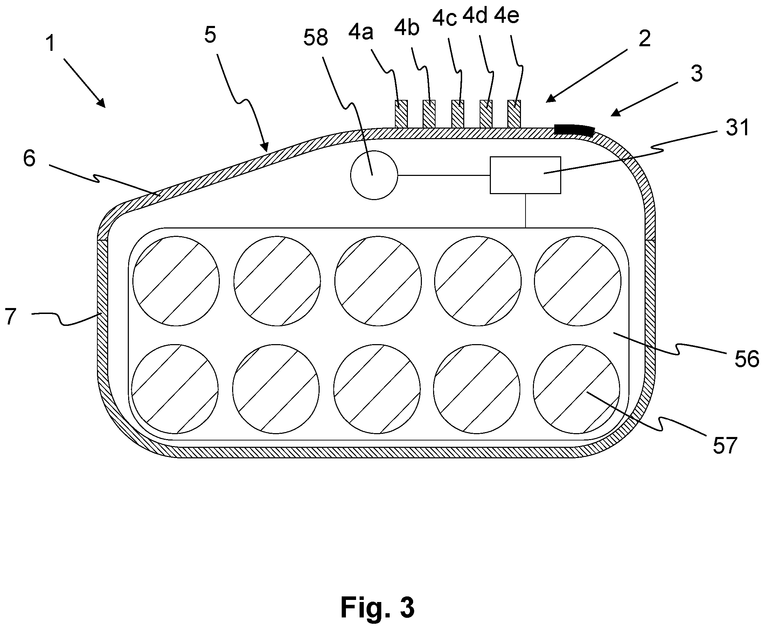

Figur 3 zeigt eine Schnittansicht des Akkumulators 1 mit einer Verifikationsvorrichtung 3. Der Akkumulator 1 umfasst das Gehäuse 5, das gemäß Figur 3 aus dem Gehäuseoberteil 6 und dem Gehäuseunterteil 7 ausgebildet ist. Das Gehäuse 5 schützt die internen Komponenten des Akkumulators 1 vor mechanischen Einwirkungen und äußeren Einflüssen.

Innerhalb des Gehäuses 5 ist die Energiespeichereinheit 56 angeordnet, die dazu dient, elektrische Energie zu speichern und/oder an das Endgerät 60 abzugeben. Die Energiespeichereinheit 56 umfasst mehrere Einzelzellen 57, die innerhalb des Gehäuses 5 angeordnet sind.

Der Akkumulator 1 weist einen Kontaktbereich 2 auf, der mehrere Kontakte 4 umfasst. Hier sind insgesamt fünf Kontakte 4 gezeigt, nämlich der erste Kontakt 4a, der zweite Kontakt 4b, der dritte Kontakt 4c, der vierte Kontakt 4d und der fünfte Kontakt 4e. Diese Kontakte 4 dienen der elektrischen Verbindung mit einem korrespondierenden Endgerät 60 und ermöglichen den Austausch elektrischer Energie und/oder die Übertragung von Daten.

Der Akkumulator 1 umfasst ferner gemäß dem vorliegenden Ausführungsbeispiel eine Akkusteuereinheit 31, die gemäß Figur 3 im Inneren des Gehäuses 5 angeordnet ist. Die Akkusteuereinheit 31 dient der Steuerung und/oder Überwachung der Betriebsfunktionen des Akkumulators 1. Die Akkusteuereinheit 31 ist mit der Verifikationsvorrichtung 3 und den Kontakten 4 verbunden, wodurch eine koordinierte Steuerung der Energieübertragung und der Kompatibilitätsprüfung erfolgt.

Zusätzlich umfasst der Akkumulator 1 des vorliegenden Ausführungsbeispiels eine Akkudatenschnittstelle 58. Die Akkudatenschnittstelle 58 ermöglicht die drahtlose oder kabelgebundene Übertragung von Daten zwischen dem Akkumulator 1 und einem angeschlossenen Endgerät 60. Vorteilhafterweise ist die Akkudatenschnittstelle 58 eine Nahfunkschnittstelle, so dass die Daten drahtlos übertragen werden können.

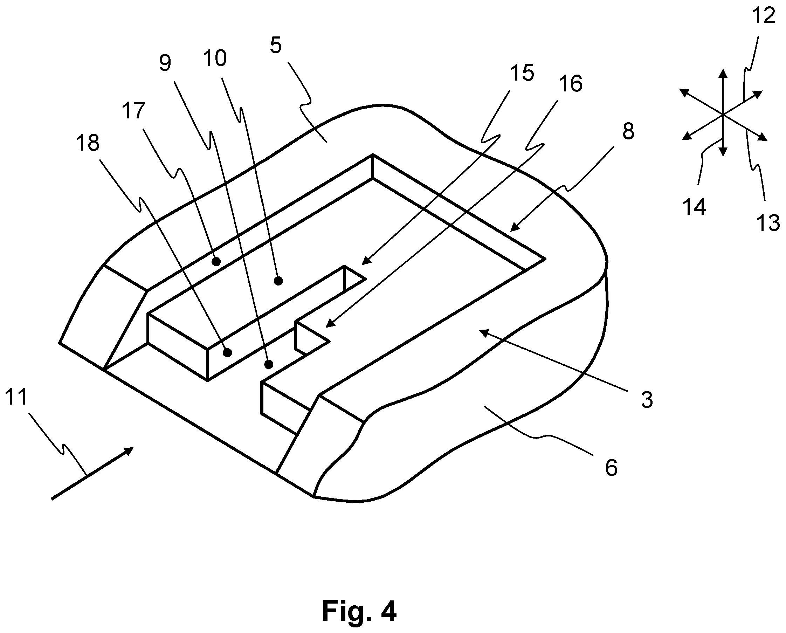

Figur 4 zeigt eine perspektivische Ansicht der Verifikationsvorrichtung 3 in und/oder am Gehäuse 5 des Akkumulators 1. Die Verifikationsvorrichtung 3 ist hier in und/oder am Gehäuseoberteil 6 angeordnet.

Die Verifikationsvorrichtung 3 umfasst den Verifikationsabschnitt 8, der gemäß Figur 4 im Bereich des Gehäuseoberteils 6 des Gehäuses 5 angeordnet ist. Der Verifikationsabschnitt 8 dient dazu, die Kompatibilität zwischen dem Akkumulator 1 und einem korrespondierenden Endgerät 60 zu überprüfen, wodurch eine sichere und zuverlässige Verbindung zwischen beiden Komponenten gewährleistet wird.

Gemäß Figur 4 umfasst der Verifikationsabschnitt 8 zumindest eine Aussparung 9 und zumindest eine Erhebung 10. Die Aussparung 9 und die Erhebung 10 sind derart ausgebildet, dass die am Endgerät 60 angeordnete Verifikationseinheit 59 und/oder Verifikationselement 29 in den Verifikationsabschnitt 8 eingeführt werden kann. Dies ermöglicht eine mechanische Prüfung der Kompatibilität nach einem Schlüssel-Schloss-Prinzip, wodurch eine fehlerhafte Verbindung vermieden wird.

Die Aussparung 9 weist gemäß Figur 4 zumindest einen ersten Aussparungsabschnitt 15 und einen zweiten Aussparungsabschnitt 16 auf. Diese Aussparungsabschnitte 15, 16 sind in einer bestimmten Anordnung im Verifikationsabschnitt 8 ausgebildet, so dass eine präzise Einführung des korrespondierenden Verifikationselements 29 erfolgt.

Die Erhebung 10 ist innerhalb der Aussparung 9 und/oder im Bereich der Aussparung 9 angeordnet und ragt in den Verifikationsabschnitt 8 hinein.

Gemäß Figur 4 erstreckt sich die Aussparung 9 in einer ersten Aussparungsebene 17 und in einer zweiten Aussparungsebene 18. Die Anordnung der Aussparung 9 in mehreren Aussparungsebenen 18, 19 ermöglicht eine komplexe Struktur des Verifikationsabschnitts 8, wodurch eine sichere und eindeutige Verifikation der Kompatibilität erfolgt.

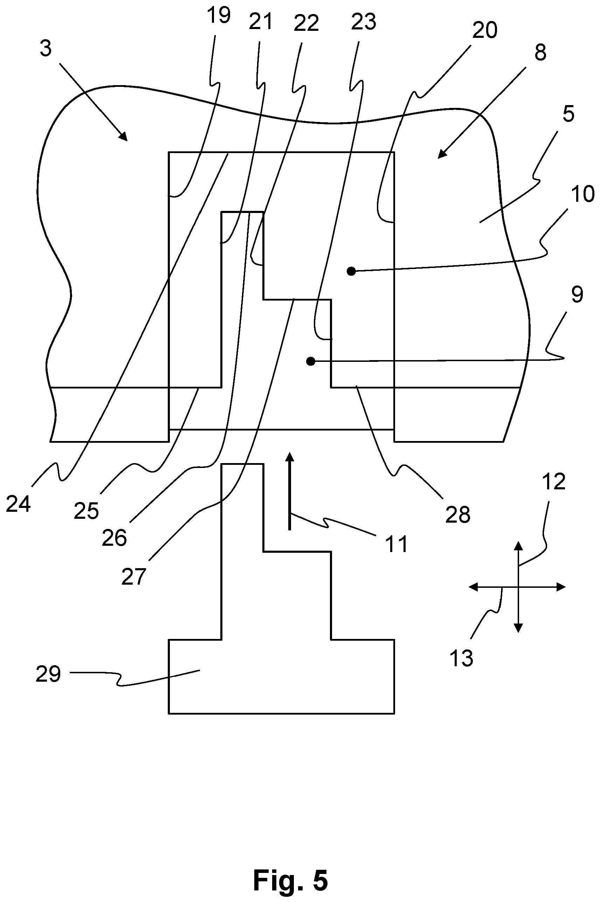

Figur 5 zeigt eine Ansicht von oben auf die Verifikationsvorrichtung 3 mit einem in die Verifikationsvorrichtung 3 eingeführten Verifikationselement 29. Die Verifikationsvorrichtung 3 umfasst den Verifikationsabschnitt 8, der gemäß Figur 5 im Bereich des Gehäuses 5 angeordnet ist. Der Verifikationsabschnitt 8 weist die Aussparung 9 und/oder die Erhebung 10 auf.

Die Aussparung 9 umfasst mehrere Aussparungsabschnitte 15, 16, insbesondere den ersten Aussparungsabschnitt 15 und den zweiten Aussparungsabschnitt 16.

Zusätzlich umfasst die Aussparung 9 gemäß Figur 5 mehrere Längsseiten 19 - 23 und Querseiten 24 - 28. Die Aussparung 9 weist eine erste Längsseite 19, eine zweite Längsseite 20, eine dritte Längsseite 21, eine vierte Längsseite 22 und eine fünfte Längsseite 23 auf. Die Längsseiten 19 - 23 ermöglichen eine Begrenzung der Aussparung 9 in Querrichtung 13. Die Längsseiten 19 - 23 erstrecken sich in Längsrichtung 12 bzw. sind in Längsrichtung 12 orientiert.

Die Aussparung 9 weist ferner mehrere Querseiten 24 - 28 auf. Die Querseiten 24 - 28 erstrecken sich in Querrichtung 13 bzw. sind in Querrichtung 13 orientiert. Die Aussparung 9 weist insbesondere eine erste Querseite 24, eine zweite Querseite 25, eine dritte Querseite 26, eine vierte Querseite 27 und eine fünfte Querseite 28 auf. Die Querseiten 24 - 28 begrenzen die Aussparung 9 in Längsrichtung 12 und gewährleisten, zusätzlich oder alternativ zu den Längsseiten 19 - 23, eine stabile und sichere Positionierung des Verifikationselements 29 im Verifikationsabschnitt 8. Des Weiteren kann durch die Längsseiten 19 - 23 und/oder Querseiten 24 - 28 überprüft werden, ob das Verifikationselement 29 in die Aussparung 9 passt, so dass dadurch die Kompatibilität überprüft werden kann.

Auf die Längsseiten 19 - 23 und/oder die Querseiten 24 - 28 wird in den folgenden Figuren des Öfteren Bezug genommen. Dort sind sie allerdings der Übersichtlichkeit halber nicht mit einem Bezugszeichen versehen.

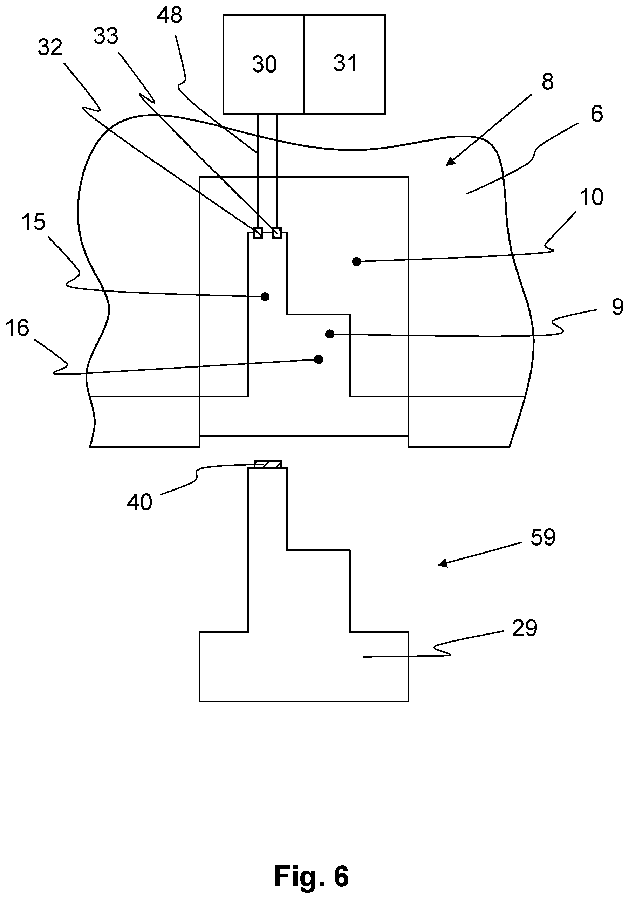

Figur 6 zeigt eine Ansicht von oben auf eine Ausführungsform der Verifikationsvorrichtung 3 mit einer Ausführungsform einer Verifikationseinheit 59. Neben der mechanischen Überprüfung der Kompatibilität zwischen Akku 1 und Endgerät 60 ist in diesem Ausführungsbeispiel eine elektrische und/oder elektronische Überprüfung der Kompatibilität gezeigt.

Das Verifikationselement 29 weist hier einen ersten Gegenkontakt 40 auf. Der erste Gegenkontakt 40 ist dafür ausgebildet, ein erstes Kontaktelement 32 und ein zweites Kontaktelement 33 der Verifikationsvorrichtung 3 elektrisch miteinander zu verbinden. Dies ermöglicht eine elektrische Überprüfung der Kompatibilität zusätzlich zur mechanischen Prüfung, da ein Stromkreis über die beiden Kontaktelemente 32, 33 geschlossen wird, wenn das Verifikationselement 29 in den Verifikationsabschnitt 8 eingeführt ist und der erste Gegenkontakt 40 die beiden Kontaktelemente 32, 33 verbindet. Die beiden Kontaktelemente 32, 33 sind hier mittels eines Leiters 48 mit der Prüfeinheit 30 verbunden. Hier und im Folgenden ist der Leiter 48 nicht mehr mit einem Bezugszeichen versehen.

Die beiden Kontaktelemente 32, 33 sind hier an der dritten Querseite 26 und/oder im ersten Aussparungsabschnitt 15 angeordnet.

Die Verifikationsvorrichtung 3 kann auch mehrere Kontaktelemente 32 - 39 umfassen, die im Folgenden erläutert werden.

Das in Figur 6 dargestellte Ausführungsbeispiel (und zumindest einige der Ausführungsbeispiele der folgenden Figuren) ermöglicht die Kombination einer mechanischen und elektrischen Prüfung der Kompatibilität durch die Verifikationsvorrichtung 3 und die Verifikationseinheit 59. Dies gewährleistet eine sichere und/oder zuverlässige Überprüfung der Kompatibilität zwischen Akkumulator 1 und Endgerät 60.

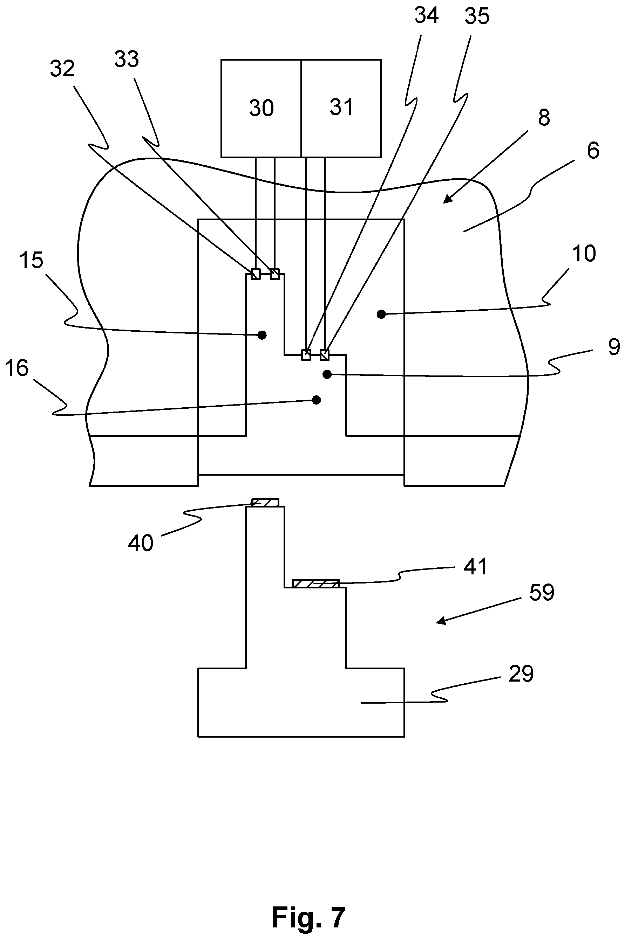

Figur 7 zeigt eine Ansicht von oben auf eine Ausführungsform der Verifikationsvorrichtung 3 mit einer Ausführungsform einer Verifikationseinheit 59.

Die Verifikationsvorrichtung 3 umfasst in diesem Ausführungsbeispiel mehrere, nämlich vier, Kontaktelemente 32 - 35, insbesondere das erste Kontaktelement 32 und das zweite Kontaktelement 33. Darüber hinaus sind gemäß Figur 7 ein drittes Kontaktelement 34 und ein viertes Kontaktelement 35 vorhanden. Die zusätzlichen beiden Kontaktelemente 34, 35 erweitern die Möglichkeiten der elektrischen Verbindung und ermöglichen eine genauere Prüfung der Kompatibilität.

Die Kontaktelemente 32 - 35 sind mit der Prüfeinheit 30 und/oder einer Akkusteuereinheit 31 verbunden.

Das erste und zweite Kontaktelement 32, 33 sind hier an der dritten Querseite 26 und das dritte und vierte Kontaktelement 34, 35 sind an der vierten Querseite 27 angeordnet.

Demgegenüber umfasst das Verifikationselement 29 zwei Gegenkontakte 40, 41 die jeweils zwei Kontaktelemente 32 - 35 überbrücken. Der erste Gegenkontakt 40 kann die ersten beiden Kontaktelemente 32, 33 und der zweite Gegenkontakt 41 kann die beiden anderen Kontaktelemente 34, 35 überbrücken, wenn das Verifikationselement 29 in den Verifikationsabschnitt 8 eingeführt ist.

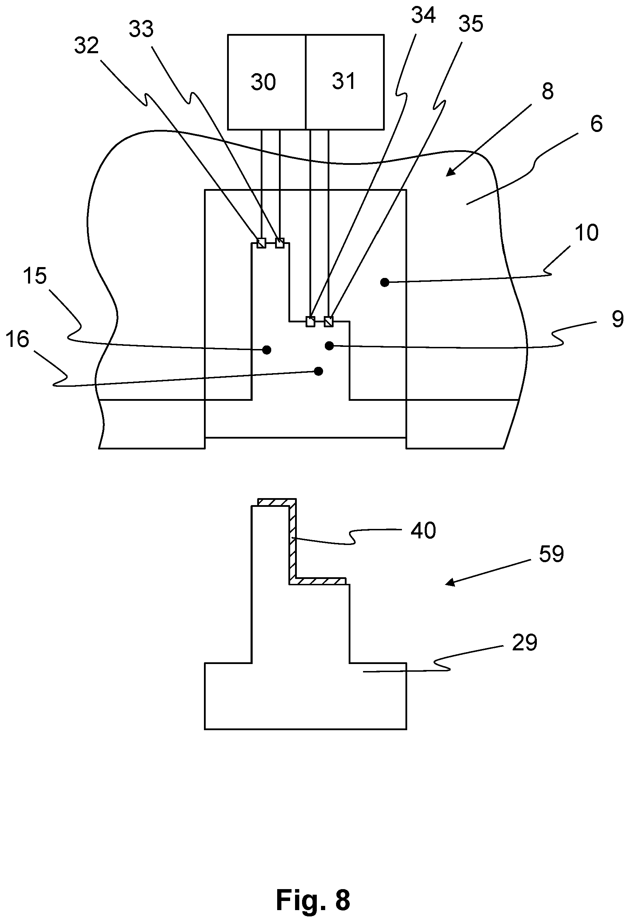

Figur 8 zeigt eine Ansicht von oben auf eine Ausführungsform der Verifikationsvorrichtung 3 mit einer Ausführungsform einer Verifikationseinheit 59. Die Figur 8 weist zur Figur 7 einen Unterschied auf. Im Gegensatz zur Figur 7 weist das Verifikationselement 29 einen einzigen, den ersten Gegenkontakt 40 auf, der mit allen vier Kontaktelementen 32 - 35 im Verifikationsabschnitt 8 in Kontakt gebracht werden kann. Der erste und einzige Gegenkontakt 40 kann somit alle Kontaktelemente 32 - 35 überbrücken bzw. eine elektrische Verbindung zwischen den Kontaktelementen 32 - 35 herstellen. Der zumindest eine Gegenkontakt 40 - 47 kann hierfür beispielsweise ein Metallelement sein und/oder ein anderes elektrisch leitfähiges Material umfassen.

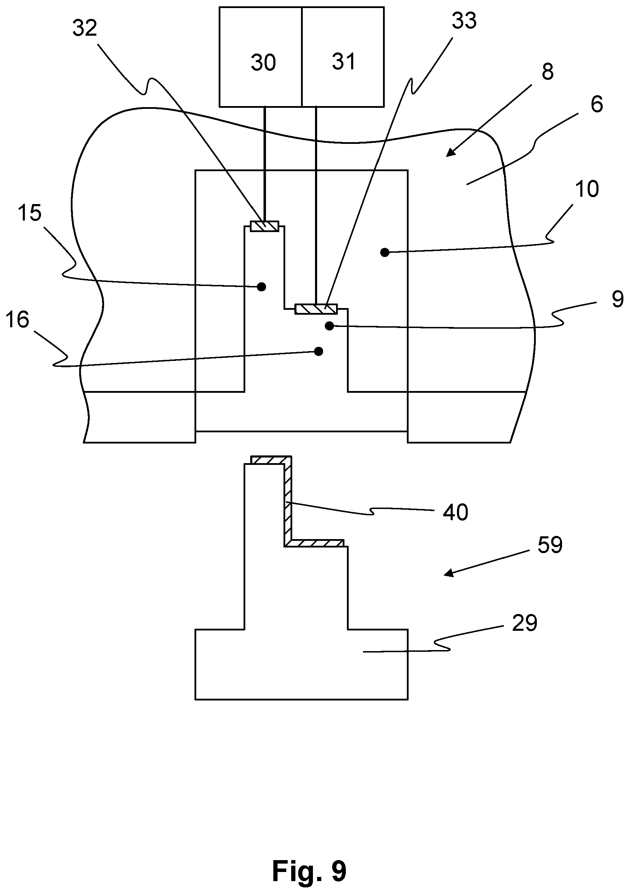

Figur 9 zeigt eine Ansicht von oben auf eine Ausführungsform der Verifikationsvorrichtung 3 mit einer Ausführungsform einer Verifikationseinheit 59.

Die Verifikationseinheit 59 umfasst das Verifikationselement 29, das den ersten und einzigen Gegenkontakt 40 umfasst.

Die Verifikationsvorrichtung 3 umfasst wieder die mehreren Kontaktelemente, nämlich hier das erste und zweite Kontaktelement 32, 33. In diesem Ausführungsbeispiel ist das erste Kontaktelement 32 an der dritten Querseite 26 und das zweite Kontaktelement 33 an der vierten Querseite 27 angeordnet. Hierdurch stellt der erste Gegenkontakt 40 eine elektrische Verbindung zwischen dem ersten Kontaktelement 32 an der dritten Querseite 26 und dem zweiten Kontaktelement 33 an der vierten Querseite 27 her.

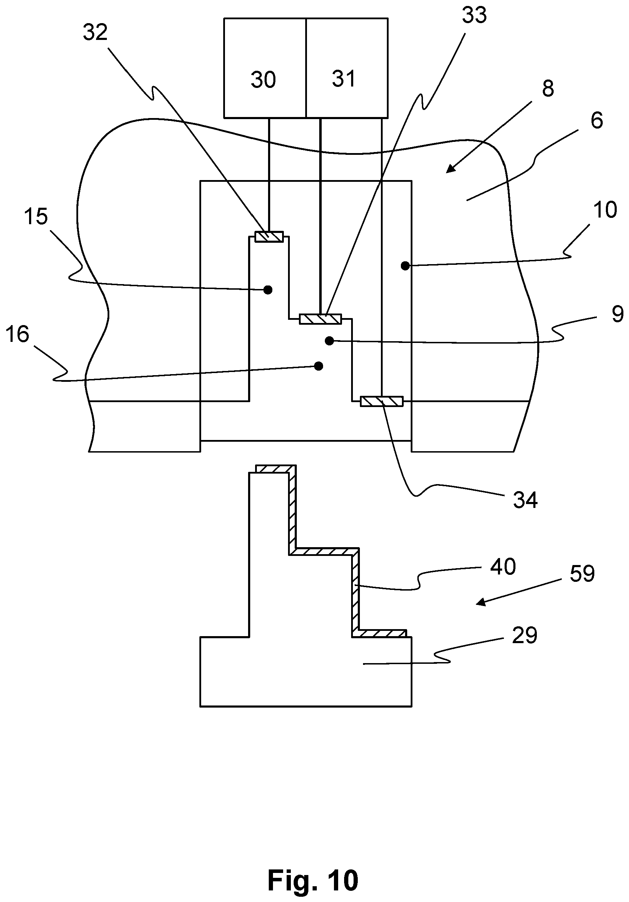

Figur 10 zeigt eine Ansicht von oben auf eine Ausführungsform der Verifikationsvorrichtung 3 mit einer Ausführungsform einer Verifikationseinheit 59.

Die Verifikationseinheit 59 umfasst das Verifikationselement 29, das den ersten und einzigen Gegenkontakt 40 aufweist.

Die Verifikationsvorrichtung 3 umfasst mehrere Kontaktelemente 32 - 34, nämlich in diesem Ausführungsbeispiel das erste Kontaktelement 32, das zweite Kontaktelement 33 und das dritte Kontaktelement 34. Diese Kontaktelemente sind im Bereich der Aussparung 9 angeordnet und mit einer Prüfeinheit 30 und einer Akkusteuereinheit 31 verbunden. Das erste Kontaktelement 32 ist an der dritten Querseite 26, das zweite Kontaktelement 33 ist an der vierten Querseite 27 und das dritte Kontaktelement 34 ist an der fünften Querseite 28 angeordnet. Mittels des ersten und einzigen Gegenkontakts 40 können alle drei Kontaktelemente 32 - 34 miteinander verbunden werden.

Die Prüfeinheit 30 ist dafür ausgelegt, die von den Kontaktelementen 32 - 34 empfangenen elektrischen Signale auszuwerten und die Kompatibilität zwischen Akkumulator 1 und Endgerät 60 zu überprüfen.

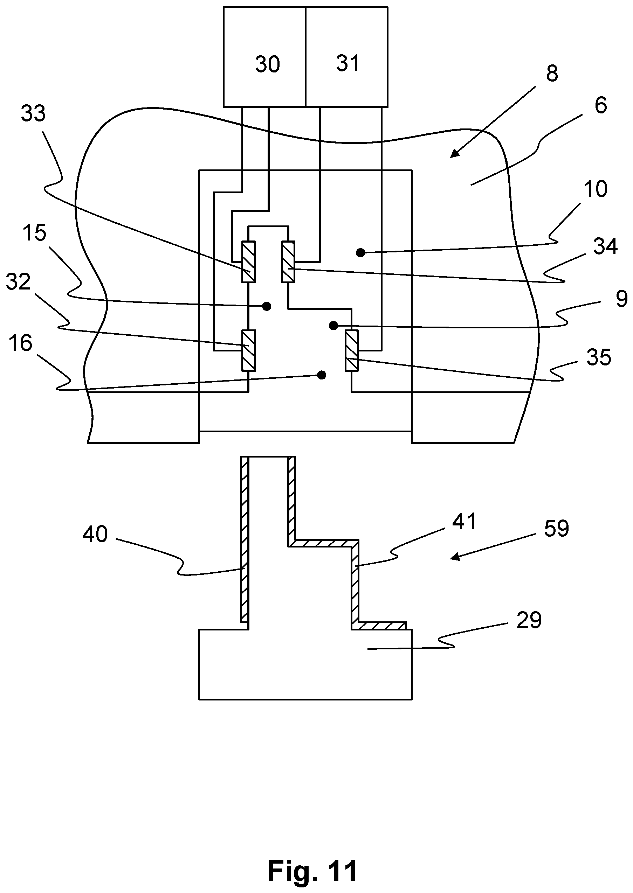

Figur 11 zeigt eine Ansicht von oben auf eine Ausführungsform der Verifikationsvorrichtung 3 mit einer Ausführungsform einer Verifikationseinheit 59.

Die Verifikationsvorrichtung 3 umfasst wieder mehrere Kontaktelemente 32 - 35, nämlich vier Kontaktelemente 32 - 35. Diese sind das erste Kontaktelement 32, das zweite Kontaktelement 33, das dritte Kontaktelement 34 und das vierte Kontaktelement 35. Die ersten beiden Kontaktelemente 32, 33 sind in diesem Ausführungsbeispiel an der dritten Längsseite 21 angeordnet. Das dritte Kontaktelement 34 ist an der vierten Längsseite 22 und das vierte Kontaktelement 35 ist an der fünften Längsseite 23 angeordnet.

Das Verifikationselement 29 umfasst hier die beiden voneinander getrennten Gegenkontakte 40, 41. Die Gegenkontakte 40, 41 sind dafür ausgelegt, mit mehreren Kontaktelementen 32 - 35 der Verifikationsvorrichtung 3 elektrisch verbunden zu werden, wodurch eine zusätzliche elektrische Prüfung der Kompatibilität erfolgt.

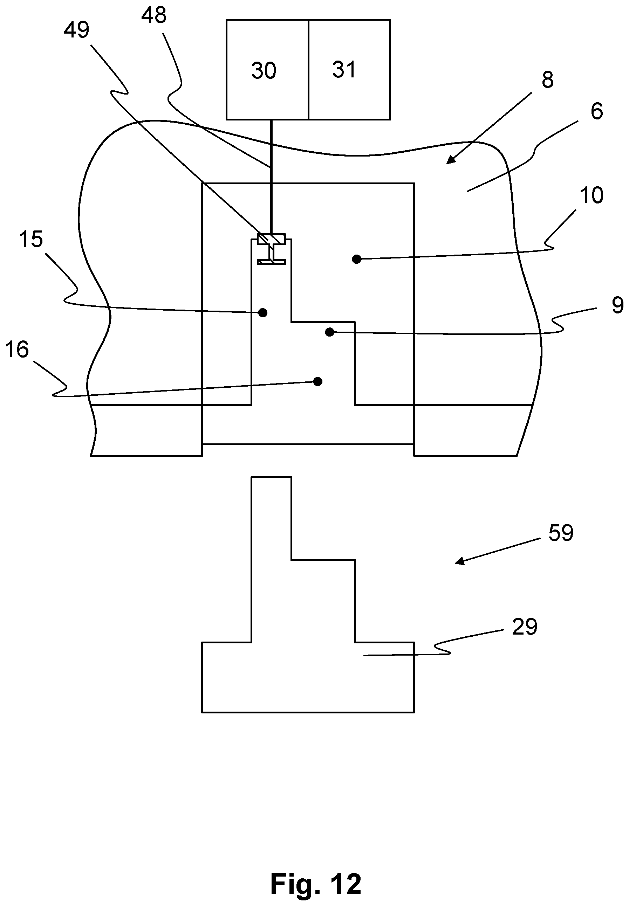

Figur 12 zeigt eine Ansicht von oben auf eine Ausführungsform der Verifikationsvorrichtung 3 mit einer Ausführungsform einer Verifikationseinheit 59.

Die Verifikationsvorrichtung 3 des hier gezeigten Ausführungsbeispiels umfasst einen ersten Schalter 49. Der erste Schalter 49 ist mit dem Leiter 48 verbunden, der eine elektrische Verbindung zwischen dem Schalter 49 und der Prüfeinheit 30 herstellt. Der erste Schalter 49 ist hier an der dritten Querseite 26 angeordnet. Der erste Schalter 49 ermöglicht eine zusätzliche elektrische Prüfung der Kompatibilität, wodurch die Sicherheit der Verbindung erhöht wird. Beim Einführen des Verifikationselements 29 in den Verifikationsabschnitt 8 wird der erste Schalter 49 gedrückt und die Verifikation kann erfolgen.

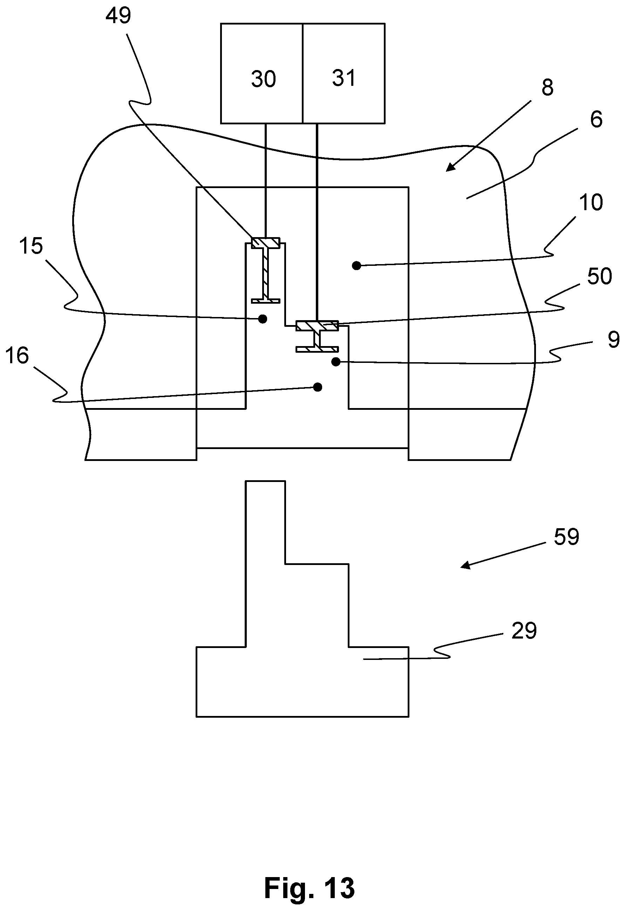

Figur 13 zeigt eine Ansicht von oben auf eine Ausführungsform der Verifikationsvorrichtung 3 mit einer Ausführungsform einer Verifikationseinheit 59. In diesem Ausführungsbeispiel umfasst die Verifikationsvorrichtung 3 den ersten Schalter 49 und einen zweiten Schalter 50. Der erste Schalter 49 ist an der dritten Querseite 26 angeordnet. Der zweite Schalter 50 ist an der vierten Querseite 27 angeordnet. Mit Hilfe der mehreren Schalter 49, 50 kann eine sichere und fälschungssichere Verifikation zwischen Endgerät 60 und Akku 1 erfolgen.

Des Weiteren können die mehreren Schalter 49, 50 einen zueinander unterschiedlichen Schaltweg aufweisen, wie es hier in der Figur 13 gezeigt ist. Hierdurch kann die Prüfung der Kompatibilität sicherer gestaltet werden. Beispielsweise wird beim Einführen des Verifikationselements 29 in den Verifikationsabschnitt 8 mit den beiden hier in Figur 13 gezeigten Schaltern 49, 50 der erste Schalter 49 zuerst gedrückt und daraufhin der zweite Schalter 50. Diesen Ablauf kann die Prüfeinheit 30 auswerten und dadurch die Kompatibilität zwischen Endgerät 60 und Akku 1 bestätigen. Alternativ kann die Prüfeinheit 30 eine nicht-Kompatibilität feststellen.

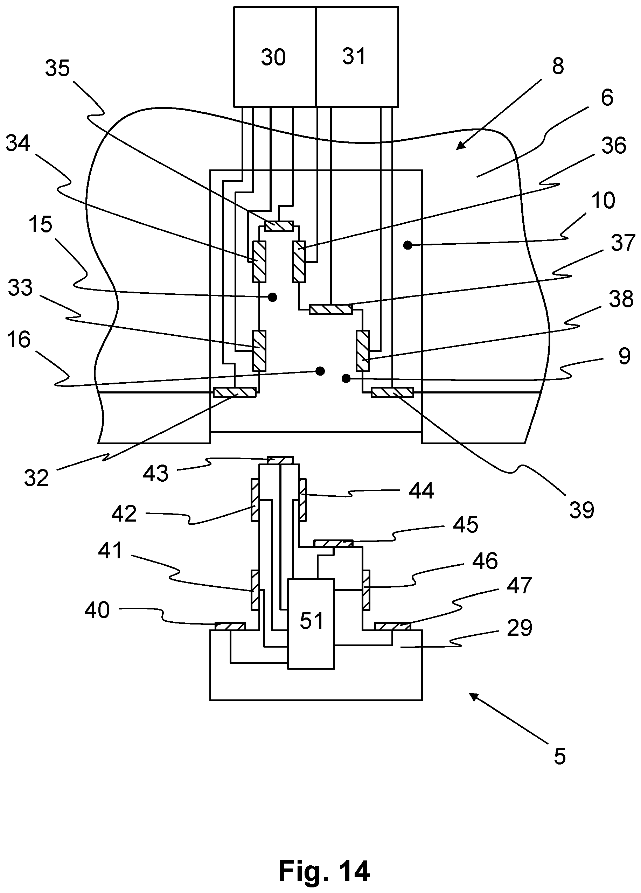

Figur 14 zeigt eine Ansicht von oben auf eine Ausführungsform der Verifikationsvorrichtung 3 mit einer Ausführungsform einer Verifikationseinheit 59.

Die Verifikationsvorrichtung 3 umfasst mehrere Kontaktelemente 32 - 39, insbesondere das erste Kontaktelement 32, das zweite Kontaktelement 33, das dritte Kontaktelement 34 und das vierte Kontaktelement 35. Des Weiteren zeigt das hier gezeigte Ausführungsbeispiel ein fünftes Kontaktelement 36, ein sechstes Kontaktelement 37, ein siebtes Kontaktelement 38 und ein achtes Kontaktelement 39 vorhanden.

Die Kontaktelemente 32 - 39 sind mit der Prüfeinheit 30 und/oder der Akkusteuereinheit 31 verbunden. Die Prüfeinheit 30 ist dafür ausgelegt, die von den Kontaktelementen 32 - 39 empfangenen elektrischen Signale auszuwerten und die Kompatibilität zwischen Akkumulator 1 und Endgerät 60 zu überprüfen.

Die Verifikationseinheit 59 umfasst darüber hinaus mehrere Gegenkontakte 40 - 47, insbesondere der erste und zweite Gegenkontakt 40, 41 sowie des Weiteren einen dritten Gegenkontakt 42, einen vierten Gegenkontakt 43, einen fünften Gegenkontakt 44, einen sechsten Gegenkontakt 45, einen siebten Gegenkontakt 46, einen achten Gegenkontakt 47.

Jeweils ein Gegenkontakt 40 - 47 ist jeweils einem Kontaktelement 32 - 39 zugeordnet. Mit der hier gezeigten Ausführung kann eine sehr sichere und fälschungssichere Prüfung auf Kompatibilität zwischen Akku 1 und Endgerät 60 durchgeführt werden.

Des Weiteren ist in diesem Ausführungsbeispiel eine Identifikationseinheit 51 gezeigt, die mit zumindest einigen oder allen der hier gezeigten mehreren Gegenkontakten 40 - 47 verbunden sein kann. Mit Hilfe der Identifikationseinheit 51 können die Gegenkontakte 40 - 47 untereinander und insbesondere wechselnd miteinander verbunden werden, um ein spezielles und/oder zeitabhängiges Verbindungsmuster der Gegenkontakte 40 - 47 auszubilden. Dieses spezielle und/oder zeitabhängige Verbindungsmuster der Gegenkontakte 40 - 47 kann der Prüfeinheit 30 bekannt sein, so dass infolgedessen eine sehr fälschungssichere Prüfung auf Kompatibilität erfolgen kann. Dies ermöglicht eine sehr sichere Verifikation zwischen Akku 1 und Endgerät 60.

Zusätzlich oder alternativ kann die Identifikationseinheit 51 auch ein elektrisches und/oder elektronisches Bauteil sein, wie beispielsweise ein Widerstand, eine Kapazität und/oder eine Induktivität, die einen festgelegten Wert, d.h. Ohm, Farad und/oder Henry, aufweist. Der Akku 1 kann diesen Wert messen und dadurch die Kompatibilität prüfen. Durch die mehreren Kontaktelemente 32 - 39 und die mehreren Gegenkontakte 40 - 47 können hierbei auch mehrere Werte gemessen werden. Beispielsweise können mit zwei Kontaktelementen 32 - 39 und Gegenkontakten 40 - 47 ein Widerstand und mit zwei weiteren Kontaktelementen 32 - 39 und Gegenkontakten 40 - 47 eine Kapazität gemessen werden. Beträgt die Messung des Widerstands und der Kapazität den festgelegten Wert, kann hieraus auf die Kompatibilität geschlossen werden. Passen die Werte nicht, kann das ein Hinweis sein, dass das Endgerät 60 nicht zertifiziert ist und/oder gefälscht ist.

Zusätzlich oder alternativ kann die Identifikationseinheit 51 auch ein Chip und/oder eine Speichereinheit sein, in dem ein Zertifikat hinterlegt ist, mit dem nachgewiesen werden kann, dass das Endgerät 60 zertifiziert ist.

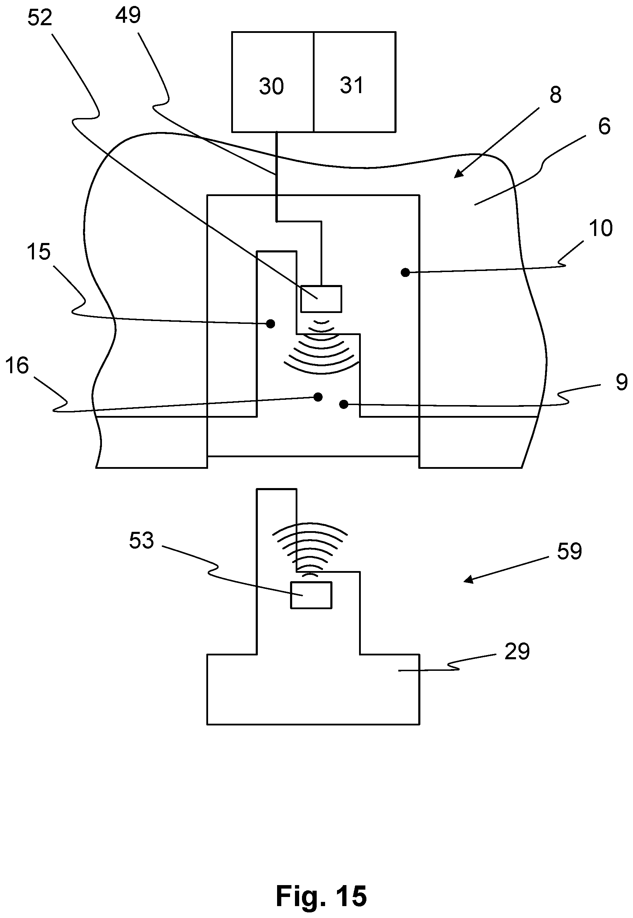

Figur 15 zeigt eine Ansicht von oben auf eine Ausführungsform der Verifikationsvorrichtung 3 mit einer Ausführungsform einer Verifikationseinheit 59.

In diesem Ausführungsbeispiel umfasst die Verifikationsvorrichtung 3 eine Akkuverifikationsschnittstelle 52, die gemäß Figur 15 als drahtlose Sende- und/oder Empfangseinheit ausgeführt sein kann. Die Akkuverifikationsschnittstelle 52 ermöglicht die Übertragung von Signalen zwischen der Verifikationsvorrichtung 3 und der Verifikationseinheit 59. Dies ermöglicht eine drahtlose Prüfung der Kompatibilität, wodurch die Sicherheit und Zuverlässigkeit der Verbindung zwischen Akkumulator 1 und Endgerät 60 erhöht werden.

Die Verifikationseinheit 59 umfasst außerdem eine Endgeräteverifikationsschnittstelle 53, die gemäß Figur 15 ebenfalls als drahtlose Sende- und/oder Empfangseinheit ausgeführt sein kann. Die Endgeräteverifikationsschnittstelle 53 ist dafür ausgelegt, Signale von der Akkuverifikationsschnittstelle 52 zu empfangen und zu verarbeiten. Die drahtlose Kommunikation zwischen der Akkuverifikationsschnittstelle 52 und der Endgeräteverifikationsschnittstelle 53 ermöglicht eine zusätzliche elektrische Prüfung der Kompatibilität.

Beispielsweise kann mittels der Kommunikation über die Akkuverifikationsschnittstelle 52 der Akku 1 bzw. die Prüfeinheit 30 und/oder die Akkusteuereinheit 31 einen Authentifizierungsschlüssel und/oder ein Zertifikat vom angekoppelten Endgerät 60 abfragen. Über die Akkuverifikationsschnittstelle 52 kann der Akku 1 bzw. die Prüfeinheit 30 und/oder die Akkusteuereinheit 31 den Authentifizierungsschlüssel und/oder das Zertifikat und/oder eine entsprechend darauf basierende Antwort empfangen. Die Prüfeinheit 30 und/oder die Akkusteuereinheit 31 kann die empfangenen Daten auswerten und darüber die Kompatibilität prüfen. Dieses Verfahren stellt eine sehr sichere Prüfung auf Kompatibilität dar. Eine Fälschung des Akkus 1 und/oder des Endgeräts 60 kann hierdurch nahezu ausgeschlossen werden.

Zusätzlich oder alternativ zur Funkübertragung zwischen der Akkuverifikationsschnittstelle 52 und der Endgeräteverifikationsschnittstelle 53 kann die Verifikation mittels dieser beiden Schnittstellen 52, 53 auch akustisch und/oder optisch erfolgen. Beispielsweise kann die Akkuverifikationsschnittstelle 52 oder die Endgeräteverifikationsschnittstelle 53 als Lautsprecher und die entsprechend andere Schnittstelle 52, 53 als Mikrofon ausgebildet sein. Dadurch kann ein akustischer Authentifizierungsschlüssel und/oder oder ein akustisches Zertifikat übertragen werden, die beispielsweise als eine Tonfolge codiert sind.

Zusätzlich oder alternativ kann die Akkuverifikationsschnittstelle 52 oder die Endgeräteverifikationsschnittstelle 53 auch als Leuchte, insbesondere eine LED und/oder eine Infrarot-LED und/oder Ultraviolett-LED, ausgebildet sein und die entsprechend andere Schnittstelle 52, 53 als optisches Erfassungsmittel, beispielsweise als Fotodiode, ausgebildet sein. Infolgedessen kann ein optischer Authentifizierungsschlüssel und/oder ein optisches Zertifikat übertragen werden, die beispielsweise als eine Lichtfolge codiert sind.

Die Verifikation zwischen dem Akku 1 und dem Endgerät 60 kann somit mittels einer Funkverbindung, insbesondere der Nahfunkschnittstelle, und/oder optisch und/oder akustisch erfolgen. Zur Verifikation können somit Funksignale und/oder optische Signale und/oder akustische Signale verwendet werden.

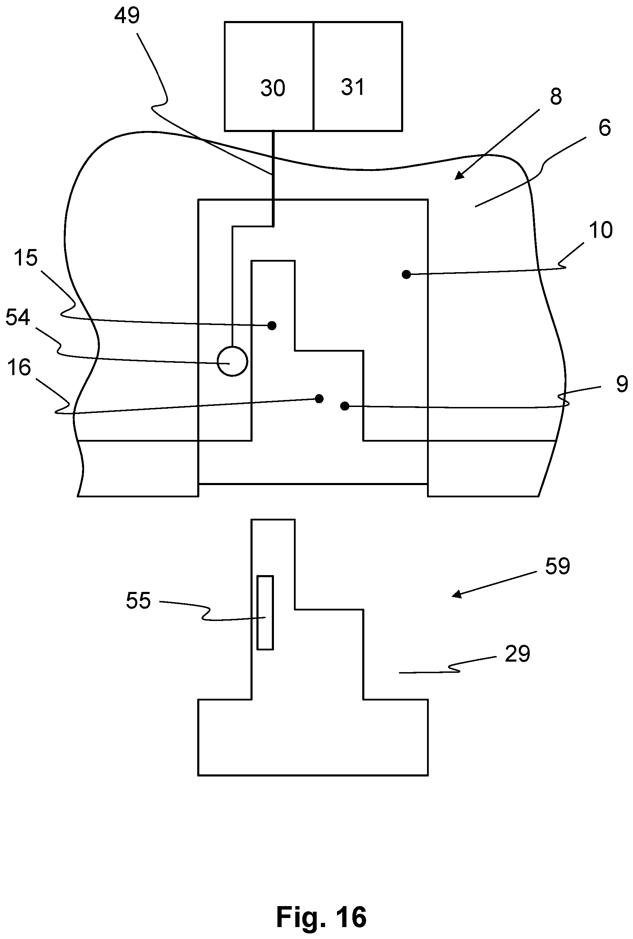

Figur 16 zeigt eine Ansicht von oben auf eine Ausführungsform der Verifikationsvorrichtung 3 mit einer Ausführungsform einer Verifikationseinheit 59.

Die hier gezeigte Verifikationsvorrichtung 3 umfasst einen Sensor 54, der gemäß dem vorliegenden Ausführungsbeispiel im Bereich des ersten Aussparungsabschnitts 15 angeordnet ist. Der Sensor 54 ist dafür ausgelegt, die Position oder die Anwesenheit des Verifikationselements 29 zu erfassen.

Die Verifikationseinheit 59 umfasst außerdem ein Detektionselement 55, das gemäß dem vorliegenden Ausführungsbeispiel im Verifikationselement 29 angeordnet ist. Das Detektionselement 55 ist dafür ausgelegt, mit dem Sensor 54 zu interagieren, wodurch die korrekte Positionierung und die ordnungsgemäße Verbindung zwischen Akkumulator 1 und Endgerät 60 überprüft werden können.

Beispielsweise kann das Detektionselement 55 ein Magnetelement sein, wobei der Sensor 54 ein Hallsensor ist. Dadurch kann der Sensor 54 auf sichere Weise das Detektionselement 55 erfassen.

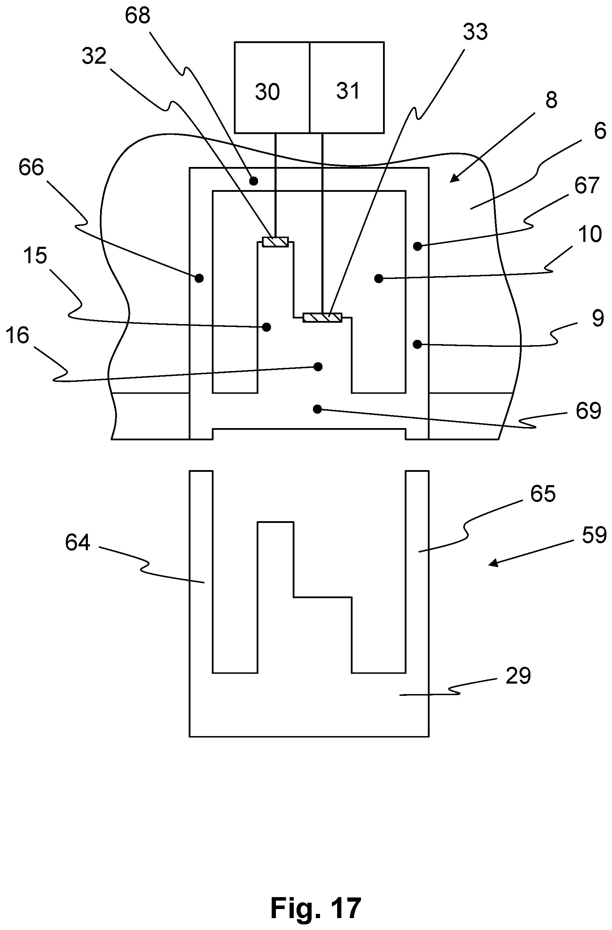

Figur 17 zeigt eine Ansicht von oben auf eine Ausführungsform der Verifikationsvorrichtung 3 mit einer Ausführungsform einer Verifikationseinheit 59.

Der Verifikationsabschnitt 8 weist hier die Aussparung 9 und die Erhebung 10 auf. Die Aussparung 9 erstreckt sich in diesem Ausführungsbeispiel vollständig um die Erhebung 10 herum. Die Aussparung 9 erstreckt sich in Längsrichtung 12 und in Querrichtung 13 um die Erhebung 10 herum. Die Erhebung 10 ist von der Aussparung 9 umrandet. Des Weiteren umfasst das Verifikationselement 29 zwei, insbesondere längliche, Fortsätze 64, 65, die, wie hier zu sehen ist, links und rechts angeordnet sind.

Des Weiteren umfasst die Aussparung 9 des hier gezeigten Ausführungsbeispiels neben den bereits beschriebenen ersten und zweiten Aussparungsabschnitten 15, 16 auch noch einen dritten Aussparungsabschnitt 66, einen vierten Aussparungsabschnitt 67, einen fünften Aussparungsabschnitt 68 und einen sechsten Aussparungsabschnitt 69. Der dritte und vierte Aussparungsabschnitt 66, 67 sind in Querrichtung 13 jeweils neben der Erhebung 10 angeordnet. In den dritten und vierten Aussparungsabschnitt 66, 67 können die beiden Fortsätze 64, 65 des Verifikationselements 29 eingeführt werden. Der fünfte und sechste Aussparungsabschnitt 68, 69 erstreckt sich in Querrichtung 13. Die vier Aussparungsabschnitte 66, 67, 68, 69, der dritte, der vierte, der fünfte und der sechste Aussparungsabschnitt 66, 67, 68, 69 umranden die Erhebung 10. Der fünfte und sechste Aussparungsabschnitt 68, 69 sind in Längsrichtung 12 voneinander beabstandet und erstrecken sich in Querrichtung 13. Die vier Aussparungsabschnitte 66, 67, 68, 69 rahmen die Erhebung 10 in Längsrichtung 12 und in Querrichtung 13 ein.

Der sechste Aussparungsabschnitt 69 wird lediglich hier bei der Figur 17 beschrieben. Der sechste Aussparungsabschnitt 69 ist bereits in den vorangegangenen Figuren gezeigt bzw. vorhanden.

Insbesondere die Erhebung 10 weist hier die Form eines "E"s auf.

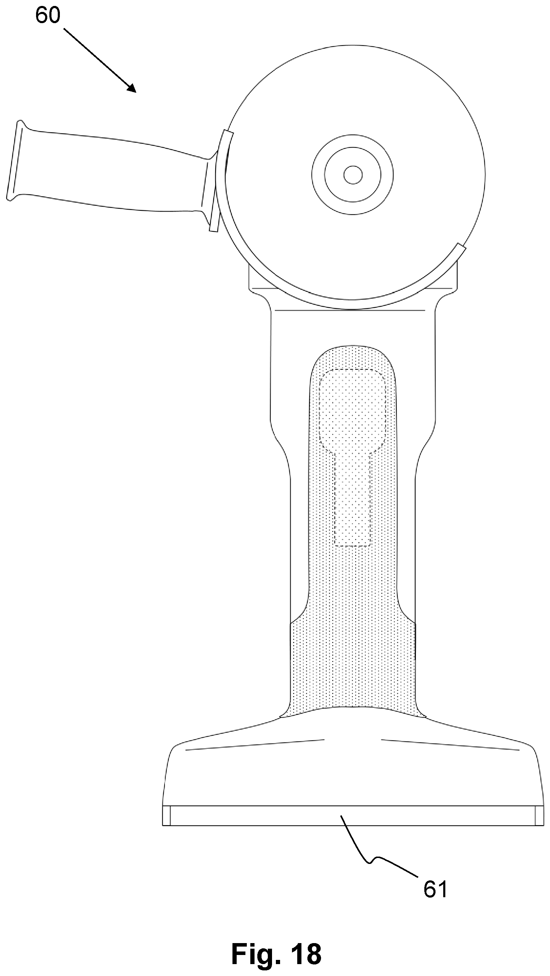

Figur 18 zeigt eine schematische Ansicht eines Endgeräts 60. Das Endgerät 60 ist hier beispielhaft als Winkelschleifer ausgeführt. Das Endgerät 60 ist derart gestaltet, dass es mit dem Akkumulator 1 verbunden werden kann, um elektrische Energie für den Betrieb des Endgeräts 60 bereitzustellen. Das Endgerät 60 umfasst hierfür einen Koppelbereich 61, der gemäß Figur 18 im unteren Bereich des Endgeräts 60 angeordnet ist. Der Koppelbereich 61 dient der mechanischen und/oder elektrischen Verbindung des Endgeräts 60 mit dem korrespondierenden Akkumulator 1.

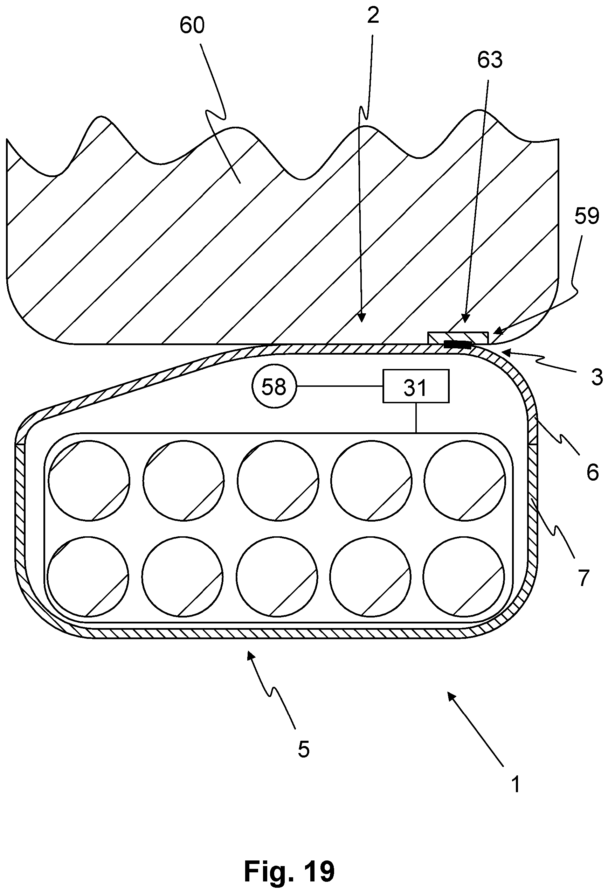

Figur 19 zeigt eine Schnittansicht eines Akkumulators 1 und eines damit gekoppelten Endgeräts 60.

Der Akkumulator 1 umfasst das Gehäuse 5, das gemäß Figur 19 aus einem Gehäuseoberteil 6 und einem Gehäuseunterteil 7 ausgebildet ist. Das Gehäuse 5 schützt die internen Komponenten des Akkumulators 1 und gewährleistet eine stabile mechanische Verbindung mit dem Endgerät 60.

Der Akkumulator 1 weist den Kontaktbereich 2 auf, der gemäß Figur 19 im oberen Bereich des Gehäuses 5 angeordnet ist. Der Kontaktbereich 2 dient der elektrischen Verbindung zwischen dem Akkumulator 1 und dem Endgerät 60 und ermöglicht den Austausch elektrischer Energie. Die Kontakte 4 sind hier nicht dargestellt.

Die Verifikationsvorrichtung 3 kann, wie es in diesem Ausführungsbeispiel gezeigt ist, im Bereich neben dem Kontaktbereich 2 angeordnet sein.

Des Weiteren ist hier das Verifikationssystem 63 gezeigt, dass die Verifikationsvorrichtung 3 des Akkumulators 1 und die Verifikationseinheit 59 des Endgeräts 60 umfasst. Die Verifikationsvorrichtung 3 des Akkumulators 1 und die Verifikationseinheit 59 des Endgeräts 60 sind hier miteinander gekoppelt. Beispielsweise kann hierfür das Verifikationselement 29 der Verifikationseinheit 59 in den Verifikationsabschnitt 8 der Verifikationsvorrichtung 3 eingeführt sein. Infolgedessen können, wie es in den vorherigen Figuren beschrieben ist, beispielsweise die Kontaktelemente 32 - 39, Schalter 49, 50, der Sensor 54, die Akkuverifikationsschnittstelle 52 und/oder die Endgeräteverifikationsschnittstelle 53 zur Prüfung der Kompatibilität zwischen Akku 1 und Endgerät 60 verwendet werden. Das Verifikationselement 29 aktiviert beispielsweise die Schalter 49, 50 und/oder kontaktiert bzw. überbrückt das zumindest eine Kontaktelement 32 - 39 und/oder aktiviert den Sensor 54 und/oder stellt die Kommunikationsverbindung zwischen der Akkuverifikationsschnittstelle 52 und der Endgeräteverifikationsschnittstelle 53 her. Das Verifikationselement 29 ist zusätzlich oder alternativ derart ausgebildet, dass es in den Verifikationsabschnitt 8 passt. Die Form des Verifikationselements 29 und des Verifikationsabschnitts 8 sind aufeinander abgestimmt bzw. sind einander angepasst.

Das Verifikationselement 29 ist zusätzlich oder alternativ derart ausgebildet, eingerichtet und/oder geformt, dass es den zumindest einen Schalter 49, 50 aktiviert, das zumindest ein Kontaktelement 32 - 39 kontaktiert bzw. überbrückt, den zumindest einen Sensor 54 aktiviert und/oder die Kommunikationsverbindung zwischen der Akkuverifikationsschnittstelle 52 und der Endgeräteverifikationsschnittstelle 53 herstellt.

Der Akkumulator 1 umfasst eine Akkusteuereinheit 31, die gemäß dem vorliegenden Ausführungsbeispiel im Inneren des Gehäuses 5 angeordnet ist. Die Akkusteuereinheit 31 ist dazu ausgelegt und/oder eingerichtet, die Betriebsfunktionen des Akkumulators 1 zu steuern und die Verbindung mit dem Endgerät 60 zu überwachen. Zusätzlich oder alternativ kann der Akku 1 die Prüfeinheit 30 aufweisen. Die Prüfeinheit 30 kann hierbei mit in der Akkusteuereinheit 31 integriert sein und/oder die Prüfeinheit 30 und die Akkusteuereinheit 31 können eine Einheit bilden, beispielsweise als ein einziger Computerchip. Zusätzlich oder alternativ kann die Akkusteuereinheit 31 die Prüfeinheit 30 sein.

Zusätzlich umfasst der Akkumulator 1 eine Akkudatenschnittstelle 58, die gemäß Figur 19 im Bereich des Gehäuseoberteils 6 angeordnet ist. Die Akkudatenschnittstelle 58 ermöglicht die Übertragung von Daten auf den Akkumulator 1. Beispielsweise kann mit Hilfe der Akkudatenschnittstelle 58 eine Verbindung zu einem übergeordneten Netzwerk und/oder zum Internet und/oder zu einem Smartphone ausbildet. Zusätzlich oder alternativ kann mit der Akkudatenschnittstelle 58 auch eine Verbindung zum Endgerät 60 hergestellt werden.

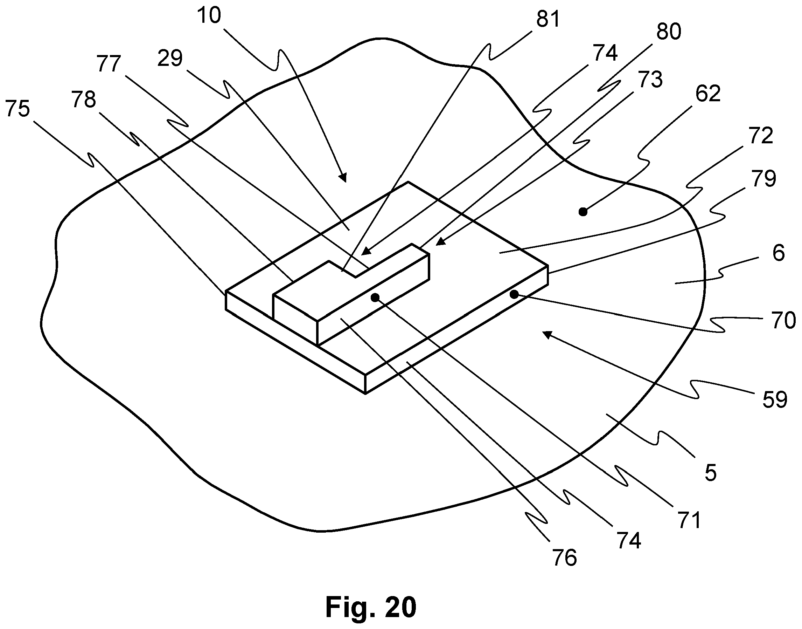

Figur 20 zeigt eine perspektivische Ansicht einer Verifikationseinheit 59.

Die Verifikationseinheit 59 ist auf dem Gehäuseoberteil 6 des Gehäuses 5 angeordnet. Die Verifikationseinheit 59 und/oder das Verifikationselement 29 ist auf einer Gehäuseaußenseite 62 des Gehäuseoberteils 6 und/oder des Gehäuses 5 angeordnet. Das Verifikationselement 29 bildet zum Verifikationsabschnitt 8 das Gegenstück. Der Verifikationsabschnitt 8 kann als Negativ und das Verifikationselement 29 als Positiv bezeichnet werden, die zueinander passen.

Die Verifikationseinheit 59 umfasst das Verifikationselement 29, das gemäß Figur 20 eine spezifische geometrische Form aufweist. Die Form des Verifikationselements 29 ist derart gestaltet, dass es in eine korrespondierende Aussparung 9 bzw. in den Verifikationsabschnitt 8 der Verifikationsvorrichtung 3 eingeführt werden kann.

Das Verifikationselement 29 umfasst eine erste Elementebene 70 und eine zweite Elementebene 71. Diese beiden Elementebenen 70, 71 passen zu den Aussparungsebenen 15, 16 des Verifikationsabschnitts 8. Insbesondere weisen sie eine zueinander passende Höhe auf.

Des Weiteren umfasst das Verifikationselement 29 einen ersten Elementabschnitt 72, einen zweiten Elementabschnitt 73 und einen dritten Elementabschnitt 74 auf. Der zweite und der dritte Elementabschnitt 72, 73 passen hierbei in die beiden ersten und zweiten Aussparungsabschnitte 15, 16. Der zweite Elementabschnitt 72 kann in den ersten Aussparungsabschnitt 15 und der dritte Elementabschnitt 73 kann in den zweiten Aussparungsabschnitt 16 eingeführt und angeordnet werden. Der erste Elementabschnitt 71 kann in der ersten Aussparungsebene 17 der Aussparung 9 eingeführt und angeordnet werden.

Das Verifikationselement 29 umfasst außerdem mehrere Elementlängsseiten 74 - 78 und mehrere Elementquerseiten 79 - 81. Diese sind den Längsseiten 19 - 23 und den Querseiten 24 - 28 des Verifikationsabschnitts 8 zugeordnet.

Für die folgenden Zuordnung ist ein Vergleich der Figuren 5 und 20 hilfreich. Die Zuordnung ist so zu verstehen, dass diese entsteht, wenn das Verifikationselement 29 in den Verifikationsabschnitt 8 eingeführt wird bzw. eingeführt ist. Die erste Elementlängsseite 74 ist der erste Längsseite 19 zugeordnet. Die zweite Elementlängsseite 75 ist der zweiten Längsseite 20 zugeordnet. Die dritte Elementlängsseite 76 ist der dritten Längsseite 21 zugeordnet. Die vierte Elementlängsseite 77 der vierten Längsseite 22 zugeordnet. Die fünfte Elementlängsseite 78 ist der fünften Längsseite 23 zugeordnet. Die erste Elementquerseite 79 ist der ersten Querseite 24 zugeordnet. Die zweite Elementquerseite 80 ist der zweiten Querseite 26 zugeordnet. Die dritte Elementquerseite 81 ist der dritten Querseite 27 zugeordnet. Die Gegenkontakte 40 - 47 sind gemäß dem möglichen in den Figuren beschriebenen Ausführungen an den entsprechenden Elementlängsseiten 74 - 78 und/oder den Elementquerseiten 79 - 81 angeordnet, um mit den entsprechenden Kontaktelementen 32 - 39 kontaktiert zu werden.

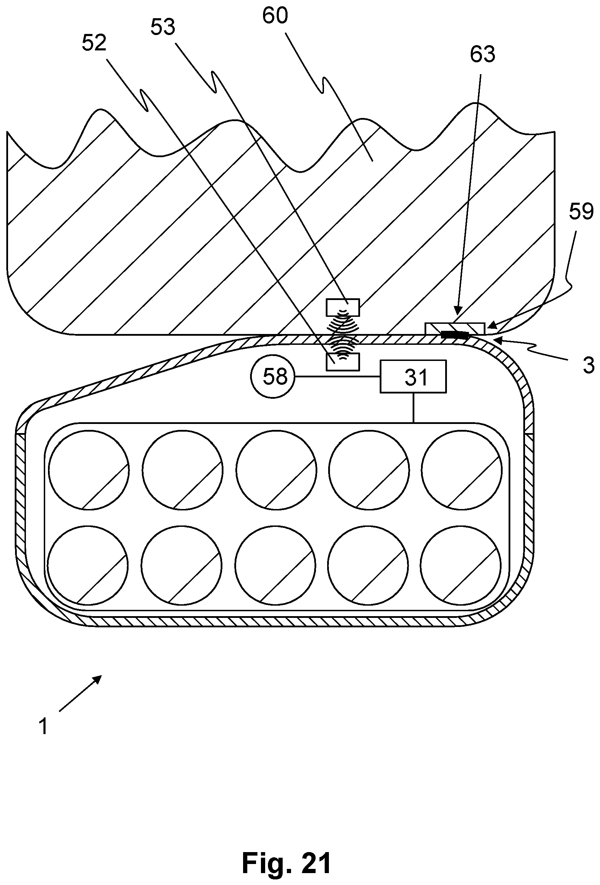

Figur 21 zeigt ein weiteres Ausführungsbeispiel einer Kopplung eines Akkumulators 1 mit dem Endgerät 60, wobei das Endgerät 60 hier lediglich teilweise gezeigt ist.

Zusätzlich ist im Akkumulator 1 eine Akkuverifikationsschnittstelle 52 vorgesehen, die ferner eine drahtlose Sende- und/oder Empfangseinheit umfassen kann. Diese Akkuverifikationsschnittstelle 52 ist zur drahtlosen Kommunikation mit einer Endgeräteverifikationsschnittstelle 53 des Endgeräts 60 ausgebildet. Die Endgeräteverifikationsschnittstelle 53 kann ebenfalls eine entsprechende Sende- und/oder Empfangseinheit umfassen. Die Akkuverifikationsschnittstelle 52 und die Endgeräteverifikationsschnittstelle 53 dienen zur Verifikation des Akkus 1 und des Endgeräts 60.

Wie bereits vorangegangen beschrieben ist, kann die Verifikation mittels der Akkuverifikationsschnittstelle 52 und der Endgeräteverifikationsschnittstelle 53 auf mehrere Wege erfolgen. Beispielsweise kann über die Akkuverifikationsschnittstelle 52 und die Endgeräteverifikationsschnittstelle 53 eine Funkverbindung ausgebildet werden, über die die Verifikation, beispielsweise der Austausch des Authentifizierungsschlüssels und/oder des Zertifikats, erfolgt. Zusätzlich oder alternativ kann über die Akkuverifikationsschnittstelle 52 und die Endgeräteverifikationsschnittstelle 53 eine Licht- und/oder Tonfolge übertragen werden, um beispielsweise den Authentifizierungsschlüssel und/oder das Zertifikat optisch und/oder akustisch zu übertragen. Die Akkuverifikationsschnittstelle 52 und die Endgeräteverifikationsschnittstelle 53 können somit als Sende- und Empfangsantenne ausgebildet sein. Zusätzlich oder alternativ können die Akkuverifikationsschnittstelle 52 und die Endgeräteverifikationsschnittstelle 53 auch als Lautsprecher und Mikrofon und/oder als Leuchte, beispielsweise LED und/oder Infrarot-LED und/oder Ultraviolett-LED, und als Erfassungsmittel, beispielsweise als Fotodiode, ausgebildet sein.

Die Verifikationseinheit 59 ist mit einer Akkusteuereinheit 31 verbunden, welche die Verifikationsprozesse überwacht und steuert. Zusätzlich ist im vorliegenden Ausführungsbeispiel eine Akkudatenschnittstelle 58 gezeigt. Mit Hilfe der Akkudatenschnittstelle 58 kann der Akku 1 ebenfalls eine Verbindung zum Endgerät 60 aufbauen. Zusätzlich oder alternativ kann mittels der Akkudatenschnittstelle 58 auch eine Datenverbindung zu einer externen, hier nicht gezeigten Einheit ausgebildet werden. Die externe Einheit kann beispielsweise ein Smartphone, Laptop oder ähnliches sein. Die externe Einheit kann zusätzlich oder alternativ auch das Internet sein. Mittels der Akkudatenschnittstelle 58 kann auch eine Verbindung zu einen Funknetzwerk oder ähnlichen aufgebaut werden.

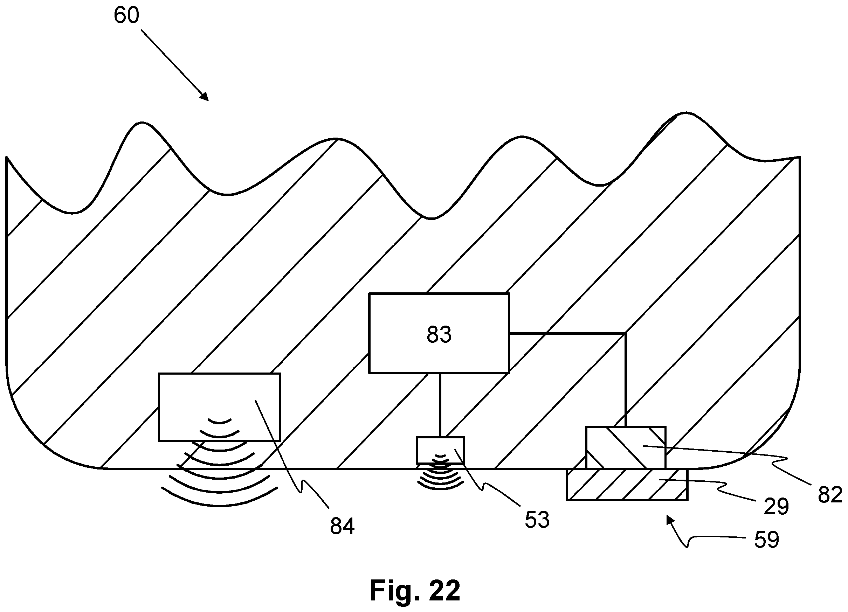

Das in Figur 22 dargestellte Ausführungsbeispiel zeigt eine schematischen Schnittansicht des Endgeräts 60, das hier allerdings lediglich teilweise gezeigt ist.

Das Endgerät 60 weist die Verifikationseinheit 59 auf, die das Verifikationselement 29 umfasst. Das Verifikationselement 29 ist lösbar in einem Bereich des Endgeräts 60 angeordnet, wobei das Verifikationselement 29 in diesem Ausführungsbeispiel durch einen Verriegelungsmechanismus 82 gehalten ist. Der Verriegelungsmechanismus 82 ist derart ausgestaltet, dass das Verifikationselement 29 in einer Verriegelungseinstellung fest mit dem Endgerät 60 verbunden ist. In einer Entriegelungseinstellung kann das Verifikationselement 29 vom Endgerät 60 entfernt werden.

Das Endgerät 60 umfasst in diesem Ausführungsbeispiel eine Endgerätesteuereinheit 83, die beispielsweise das Endgerät 60 steuern kann.

Der Verriegelungsmechanismus 82 ist im vorliegenden Ausführungsbeispiel als elektromechanischer Verriegelungsmechanismus ausgebildet. Die Betätigung dieses Mechanismus kann beispielsweise über die Endgerätesteuereinheit 83 gesteuert erfolgen.

Die Endgerätesteuereinheit 83 ist funktional mit einer Endgeräteverifikationsschnittstelle 53 verbunden. Diese ist als drahtlose Sende- und/oder Empfangseinheit ausgestaltet und dient der Kommunikation mit einer korrespondierenden Akkuverifikationsschnittstelle 52 auf Seiten des Akkumulators 1. Über die Endgeräteverifikationsschnittstelle 53 kann ein Freischaltcode vom Akkumulator 1 an das Endgerät 60 übertragen werden. Damit kann der Verriegelungsmechanismus 82 angesteuert werden, so dass das Verifikationselement 29 vom Endgerät 60 gelöst werden kann. Dadurch kann die Verifikation deaktiviert werden, so dass das Endgerät 60 mit anderen Akkus 1 gekoppelt werden kann.

Zusätzlich oder alternativ umfasst das Endgerät 60 eine Endgerätedatenschnittstelle 84, die ebenfalls zur drahtlosen Datenkommunikation ausgeführt ist. Auch über diese Schnittstelle kann ein Freischaltcode empfangen werden, beispielsweise aus einer externen Systemumgebung.

Die Endgerätesteuereinheit 83 ist derart konfiguriert, dass sie nach Empfang eines gültigen Freischaltcodes den elektromechanischen Verriegelungsmechanismus 82 entriegelt. Dadurch wird das Verifikationselement 29 freigegeben und kann vom Benutzer entfernt werden. Der Verriegelungsmechanismus 82 kann beispielsweise ein Magnetverschluss sein, der das Verifikationselement 29, beispielsweise formschlüssig, hält.

Das Verifikationselement 29 ist gemäß Figur 22 in einem mechanisch geführten Bereich des Endgeräts 60 angeordnet. Der dargestellte Schnitt deutet an, dass das Verifikationselement 29 eine strukturierte Außenkontur aufweist, die mit einem zugehörigen Verifikationsabschnitt im Akkumulator 1 zusammenwirken kann.

### Bezugszeichenliste

- 1: Akkumulator
- 2: Kontaktbereich
- 3: Verifikationsvorrichtung
- 4: Kontakte
- 5: Gehäuse
- 6: Gehäuseoberteil
- 7: Gehäuseunterteil
- 8: Verifikationsabschnitt
- 9: Aussparung
- 10: Erhebung
- 11: Einführrichtung
- 12: Längsrichtung
- 13: Querrichtung
- 14: Hochrichtung
- 15: erster Aussparungsabschnitt
- 16: zweiter Aussparungsabschnitt
- 17: erste Aussparungsebene
- 18: zweite Aussparungsebene
- 19: erste Längsseite
- 20: zweite Längsseite
- 21: dritte Längsseite
- 22: vierte Längsseite
- 23: fünfte Längsseite
- 24: erste Querseite
- 25: zweite Querseite
- 26: dritte Querseite
- 27: vierte Querseite
- 28: fünfte Querseite
- 29: Verifikationselement
- 30: Prüfeinheit
- 31: Akkusteuereinheit
- 32: erstes Kontaktelement
- 33: zweites Kontaktelement
- 34: drittes Kontaktelement
- 35: viertes Kontaktelement
- 36: fünftes Kontaktelement
- 37: sechstes Kontaktelement
- 38: siebtes Kontaktelement
- 39: achtes Kontaktelement
- 40: erster Gegenkontakt
- 41: zweiter Gegenkontakt
- 42: dritter Gegenkontakt
- 43: vierter Gegenkontakt
- 44: fünfter Gegenkontakt
- 45: sechster Gegenkontakt
- 46: siebter Gegenkontakt
- 47: achter Gegenkontakt
- 48: Leiter
- 49: erster Schalter
- 50: zweiter Schalter
- 51: Identifikationseinheit
- 52: Akkuverifikationsschnittstelle
- 53: Endgeräteverifikationsschnittstelle
- 54: Sensor
- 55: Detektionselement
- 56: Energiespeichereinheit
- 57: Einzelzelle
- 58: Akkudatenschnittstelle
- 59: Verifikationseinheit
- 60: Endgerät
- 61: Koppelbereich
- 62: Gehäuseaußenseite
- 63: Verifikationssystem
- 64: erste Fortsatz
- 65: zweiter Fortsatz
- 66: dritter Aussparungsabschnitt
- 67: viertes Aussparungsabschnitt
- 68: fünfter Aussparungsabschnitt
- 69: sechster Aussparungsabschnitt
- 70: erste Elementebene
- 71: zweite Elementebene
- 72: erster Elementabschnitt
- 72: zweiter Elementabschnitt
- 73: dritter Elementabschnitt
- 74: erste Elementlängsseite
- 75: zweite Elementlängsseite
- 76: dritte Elementlängsseite
- 77: vierte Elementlängsseite
- 78: fünfte Elementlängsseite
- 79: erste Elementquerseite
- 80: zweite Elementquerseite
- 81: dritte Elementquerseite
- 82: Verriegelungsmechanismus
- 83: Endgerätesteuereinheit
- 84: Endgerätedatenschnittstelle

## Patentansprüche

1. Akkumulator (1), insbesondere ein Arbeitsgeräteakkumulator,
mit einem Kontaktbereich (2) zum Austausch elektrischer Energie zwischen einer Energiespeichereinheit (56) des Akkumulators (1) und einem Endgerät (60) und mit einer Verifikationsvorrichtung (3), mittels der eine Kompatibilität zwischen dem Akkumulator (1) und dem korrespondierenden Endgerät (60) überprüft werden kann.

2. Akkumulator nach dem vorherigen Anspruch, **dadurch gekennzeichnet, dass** die Verifikationsvorrichtung (3) eine mechanische Schnittstelle umfasst und/oder dass die Verifikationsvorrichtung (3) ein Schlüssel-Schloss-Prinzip umfasst und/oder
dass die Verifikationsvorrichtung (3) ein elektrisches und/oder elektronisches Verifikationssystem (63) ist.

3. Akkumulator nach einem der vorherigen Ansprüche, **dadurch gekennzeichnet, dass** die Verifikationsvorrichtung (3) zumindest einen, insbesondere dreidimensionalen, Verifikationsabschnitt (8) umfasst, wobei mit dem Verifikationsabschnitt (8) zumindest ein am Endgerät (60) angeordnetes Verifikationselement (29) zusammengeführt werden kann, um die Kompatibilität zu prüfen, und/oder dass der Akkumulator ein Gehäuse (5) umfasst, das vorzugsweise zumindest ein Gehäuseoberteil (6) und zumindest ein Gehäuseunterteil (7) umfasst, wobei der Verifikationsabschnitt (8) im und/oder am Gehäuse (5), insbesondere im und/oder am Gehäuseoberteil (6), angeordnet ist, und/oder
dass der Verifikationsabschnitt (8) zumindest eine Aussparung (9) und/oder zumindest eine Erhebung (10) umfasst.

4. Akkumulator nach einem der vorherigen Ansprüche, **dadurch gekennzeichnet, dass** die zumindest eine Aussparung (9) zumindest eine Aussparungsebene (17, 18) umfasst, wobei die zumindest eine Aussparung (9) vorzugsweise zumindest eine erste und eine zweite Aussparungsebene (17, 18) umfasst, wobei die zumindest zwei Aussparungsebenen (17, 18) vorzugsweise in Hochrichtung (14) übereinander angeordnet sind und/oder
dass zumindest eine Erhebung (10) zumindest in der ersten und/oder zweiten Aussparungsebene (17, 18) ist und/oder
dass die zumindest eine Aussparung (9) zumindest einen, insbesondere mehrere, Aussparungsabschnitte (15, 16) umfasst, die sich in Längsrichtung (12) und/oder in Querrichtung (13) erstrecken, wobei die zumindest eine Aussparung (9) vorzugsweise mehrere Aussparungsabschnitte (15, 16) umfasst, die in Längsrichtung (12) und/oder in Querrichtung (13) des Akkumulators (1) nebeneinander und/oder voreinander angeordnet sind und/oder
dass die zumindest eine Erhebung (10), insbesondere vollständig, von der Aussparung (9) und/oder zumindest einem Aussparungsabschnitt (15, 16) umgeben ist.

5. Akkumulator nach einem der vorherigen Ansprüche, **dadurch gekennzeichnet, dass** der Verifikationsabschnitt (8) in Blickrichtung der Hochrichtung (14) die Form eines E aufweist.

6. Akkumulator nach einem der vorherigen Ansprüche, **dadurch gekennzeichnet, dass** die Verifikationsvorrichtung (3) zumindest einen elektrischen Schalter (49, 50) umfasst und/oder
dass die Verifikationsvorrichtung (3) zumindest eine Akkuverifikationsschnittstelle (52) umfasst und/oder
dass die Akkuverifikationsschnittstelle (52) als Nahfunkschnittstelle ausgebildet ist und/oder
dass die Akkuverifikationsschnittstelle (52) ein Lautsprecher und/oder Mikrofon umfasst und/oder
dass die Akkuverifikationsschnittstelle (52) eine Lichtquelle und/oder einen Lichtsensor umfasst und/oder
die Verifikationsvorrichtung (3) zumindest einen Sensor (54) umfasst, der vorzugsweise als Hallsensor ausgebildet ist.

7. Akkumulator nach einem der vorherigen Ansprüche, **dadurch gekennzeichnet, dass** die Verifikationsvorrichtung (3) zumindest ein elektrisches Kontaktelement (32 - 39) umfasst, wobei die Verifikationsvorrichtung (3) vorzugsweise mehrere Kontaktelemente (32 - 39) umfasst und/oder
dass das zumindest eine Kontaktelement (32 - 39), der zumindest eine elektrische Schalter (49, 50), die zumindest eine Akkuverifikationsschnittstelle (52) und/oder der zumindest eine Sensor (54) im Verifikationsabschnitt (8) angeordnet sind und/oder
dass das zumindest eine Kontaktelement (32 - 39), der zumindest eine elektrische Schalter (49, 50), die zumindest eine Akkuverifikationsschnittstelle (52) und/oder der zumindest eine Sensor (54) in der Aussparung (9) angeordnet sind und/oder
dass das zumindest eine Kontaktelement (32 - 39), der zumindest eine elektrische Schalter (49, 50), die zumindest eine Akkuverifikationsschnittstelle (52) und/oder der zumindest eine Sensor (54) im Bereich neben der Aussparung (9) und/oder im Bereich neben dem Verifikationsabschnitt (8) angeordnet sind und/oder
dass das zumindest eine Kontaktelement (32 - 39), der zumindest eine elektrische Schalter (49, 50), die zumindest eine Akkuverifikationsschnittstelle (52) und/oder der zumindest eine Sensor (54) zumindest in der ersten und/oder in der zweiten Aussparungsebene (17, 18) angeordnet sind und/oder
dass das zumindest eine Kontaktelement (32 - 39), der zumindest eine elektrische Schalter (49, 50), die zumindest eine Akkuverifikationsschnittstelle (52) und/oder der zumindest eine Sensor (54) in dem zumindest einen Aussparungsabschnitt (15, 16) angeordnet sind.

8. Akkumulator nach einem der vorherigen Ansprüche, **dadurch gekennzeichnet, dass** die Schaltwege von zumindest zwei Schaltern (49, 50) zueinander unterschiedlich sind, wobei vorzugsweise alle Schaltwege der Schalter (49, 50) zueinander unterschiedlich sind.

9. Akkumulator nach einem der vorherigen Ansprüche, **dadurch gekennzeichnet, dass** der Akkumulator (1) zumindest eine elektrische und/oder elektronische Prüfeinheit (30) umfasst, mittels der die Kompatibilität zwischen Akkumulator (1) und Endgerät (60) überprüft werden kann, wobei der Akkumulator (1) vorzugsweise eine Akkusteuereinheit (31) umfasst, wobei die Akkusteuereinheit (31) die Prüfeinheit (30) umfasst und/oder wobei die Prüfeinheit (30) die Akkusteuereinheit (31) ist und/oder
dass die Prüfeinheit (30) derart ausgebildet und/oder eingerichtet ist, dass sie mit Hilfe des angekoppelten Endgeräts (60) eine Authentifizierung durchführen kann und/oder
dass die Prüfeinheit (30) derart ausgebildet und/oder eingerichtet ist, dass sie, insbesondere über das zumindest eine
Kontaktelement (32 - 39) und/oder die zumindest eine Akkuverifikationsschnittstelle (52), einen Authentifizierungsschlüssel vom angekoppelten Endgerät (60) abfragen kann und/oder
die Prüfeinheit (30) derart ausgebildet und/oder eingerichtet ist, dass sie, insbesondere über das zumindest eine Kontaktelement (32 - 39) und/oder die zumindest eine Akkuverifikationsschnittstelle (52), einen Abfragewert an das angekoppelte Endgerät (60) übertragen und einen auf Basis des Abfragewerts durch das angekoppelte Endgerät (60) veränderten Antwortwert empfangen und auswerten kann und/oder
dass die Prüfeinheit (30) derart ausgebildet und/oder eingerichtet ist, dass sie, insbesondere über das zumindest eine
Kontaktelement (32 - 39) und/oder die zumindest eine Akkuverifikationsschnittstelle (52), ein digitales Zertifikat vom angekoppelten Endgerät (60) empfangen und auswerten kann.

10. Endgerät (60), insbesondere Arbeitsgerät,
mit zumindest einem Koppelbereich (61) zum Ankoppeln zumindest eines Akkumulators (1) zum Betreiben des Endgeräts (60) und
mit zumindest einer Verifikationseinheit (59), mittels der eine Kompatibilität zwischen Akkumulator (1) und Endgerät (60) überprüft werden kann.

11. Endgerät nach dem vorherigen Anspruch, **dadurch gekennzeichnet, dass** die Verifikationseinheit (59) zumindest ein Verifikationselement (29) umfasst, wobei das zumindest eine Verifikationselement (29) vorzugsweise lösbar am Endgerät (60) angeordnet ist und/oder
dass das Verifikationselement (29) mittels eines
Verriegelungsmechanismus (82) lösbar am Endgerät (60) angeordnet ist, wobei der Verriegelungsmechanismus (82) vorzugsweise eine Verriegelungseinstellung und eine Entriegelungseinstellung umfasst, wobei in der Verriegelungseinstellung das Verifikationselement (29) mit dem Endgerät (60) gekoppelt ist und wobei in der Entriegelungseinstellung das Verifikationselement (29) vom Endgerät (60) gelöst werden kann und/oder
dass der Verriegelungsmechanismus (82) ein elektromechanischer Verriegelungsmechanismus ist und/oder
dass das Endgerät (60) und/oder die Verifikationseinheit (59) eine Endgerätesteuereinheit (83) umfasst, mittels der der elektromechanische Verriegelungsmechanismus (82) entriegelt werden kann, um das Verifikationselement (29) zu lösen.

12. Endgerät nach einem der vorherigen Ansprüche, **dadurch gekennzeichnet, dass** das Endgerät (60) und/oder die Verifikationseinheit (59) eine Endgeräteverifikationsschnittstelle (53) und/oder eine Endgerätedatenschnittstelle (84) umfasst, mittels der eine Datenverbindung zum Akkumulator (1) ausgebildet werden kann, um vom Akkumulator (1) und/oder von einem externen Gerät einen Freischaltcode zu erhalten, mittels dem der Verriegelungsmechanismus (82) entriegelt werden kann und/oder
dass die Endgeräteverifikationsschnittstelle (53) einen Lautsprecher und/oder ein Mikrofon umfasst und/oder
dass die Endgeräteverifikationsschnittstelle (53) eine Lichtquelle und/oder einen Lichtsensor umfasst.

13. Verfahren zum Anpassen eines Endgeräts (60) an einen Akkumulator (1), wobei das Endgerät (60) vorzugsweise gemäß einem oder mehreren der vorherigen Ansprüche ausgebildet ist,
bei dem ein Verifikationselement (29) zum Verifizieren einer Kompatibilität zwischen dem Endgerät (60) und Akkumulator (1) vom Endgerät (60) entfernt wird.

14. Verfahren nach dem vorherigen Anspruch, **dadurch gekennzeichnet, dass** ein Verriegelungsmechanismus (82) zum Verriegeln des Verifikationselements (29) mit dem Endgerät (60) entriegelt wird und/oder dass zum Entriegeln des Verriegelungsmechanismus (82) ein Freischaltcode auf das Endgerät (60), insbesondere eine Endgerätesteuereinheit, übertragen wird und/oder
dass das Übertragen des Freischaltcodes über eine Endgeräteverifikationsschnittstelle (53) und/oder eine Endgerätedatenschnittstelle (84) des Endgeräts (60) erfolgt und/oder
dass das Übertragen des Freischaltcodes vom Akkumulator (1) und/oder einer externen Einheit auf das Endgerät (60) erfolgt und/oder
dass das Endgerät (60) und/oder der Akkumulator (1) registriert wird und/oder
dass der Freischaltcode nach der Registrierung des Endgeräts (60) und/oder des Akkumulators (1) erhalten wird.

15. System
mit einem Akkumulator (1), der gemäß einem oder mehreren der vorherigen Ansprüche ausgebildet ist,
mit einem Endgerät (60), das mit dem Akkumulator (1) gekoppelt werden kann und
mit einem Verifikationssystem (63), mittels dem eine Kompatibilität zwischen dem Akkumulator (1) und dem Endgerät (60) überprüft werden kann,
wobei der Akkumulator (1) und/oder das Endgerät (60) vorzugsweise gemäß einem oder mehreren der vorherigen Ansprüche ausgebildet ist.
